# EUROPEAN PATENT APPLICATION

(11) **EP 4 841 782 A1**
(43) Date of publication of application: **18.11.2026**
(21) Application number: 24917703.1
(22) Date of filing: 17.01.2024
(51) Int. Cl.: H01M 50/342, H01M 50/383, H01M 50/30

(54) **BATTERY CELL, BATTERY, AND ELECTRIC DEVICE**

(71) Applicant: Contemporary Amperex Technology Co., Limited, Ningde, Fujian 352100 (CN)
(72) Inventor: WU, Kai, Ningde, Fujian 352100 (CN); QUAN, Chao, Ningde, Fujian 352100 (CN); LI, Yao, Ningde, Fujian 352100 (CN); LI, Wei, Ningde, Fujian 352100 (CN)
(74) Representative: Gong, Jinping
(86) International application number: PCT/CN2024/072827
(87) International publication number: WO 2025/152077

(57) **Abstract**

A battery cell (10), a battery (100), and an electric device. The battery cell (10) comprises a casing (1) and a pressure relief component (6); the casing (1) comprises a first wall portion (13); the pressure relief component (6) is provided on the first wall portion (13); the pressure relief component (6) comprises a first groove (61); the first groove (61) defines at least one predetermined pressure relief area (63); and the pressure relief component (6) is configured to be capable of cracking along at least part of the first groove (61) when the battery cell (10) undergoes pressure relief. The pressure relief component (6) further comprises a groove group (62); the groove group (62) is in one-to-one correspondence with the predetermined pressure relief area (63); each groove group (62) comprises a plurality of second grooves (621); the plurality of second grooves (621) are arranged at intervals in the width direction of the second grooves (621); and the second grooves (621) are configured to guide at least part of the predetermined pressure relief area (63) to flip so as to open the at least part of the predetermined pressure relief area (63). The plurality of second grooves (621) all can help the predetermined pressure relief area (63) to flip, such that flipping of the predetermined pressure relief area (63) is easier, the flipping difficulty of the predetermined pressure relief area (63) is reduced, and the risk of fire or explosion during thermal runaway of the battery cell (10) is reduced, thereby improving the reliability of the battery cell (10).

## Description

### TECHNICAL FIELD

The present application relates to the field of battery technology, and in particular, to a battery cell, a battery, and an electric device.

### BACKGROUND

In recent years, new energy vehicles have developed rapidly. In the field of electric vehicles, traction batteries, as power sources of electric vehicles, play an irreplaceable important role. With the vigorous promotion of new energy vehicles, the demand for traction battery products is also increasing. As the demand for batteries grows, higher requirements are imposed on the reliability of battery cells. Therefore, how to improve the reliability of battery cells is an urgent problem to be solved in battery technology.

### SUMMARY

Embodiments of the present application provide a battery cell, a battery, and an electric device, which can effectively improve the reliability of the battery cell.

According to a first aspect, embodiments of the present application provide a battery cell including a housing and a pressure relief component, where the housing includes a first wall portion; the pressure relief component is disposed on the first wall portion; the pressure relief component includes a first groove; the first groove defines at least one predetermined pressure relief region; the pressure relief component is configured to be capable of cracking along at least a portion of the first groove when the battery cell undergoes pressure relief; the pressure relief component further includes a groove group; the groove group is in one-to-one correspondence with the predetermined pressure relief region; each groove group includes a plurality of second grooves; the plurality of second grooves are spaced apart along a width direction of the second grooves; and the second groove is configured to guide at least a portion of the predetermined pressure relief region to flip so as to open the at least a portion of the predetermined pressure relief region.

In the above technical solution, the pressure relief component includes the first groove, so that the pressure relief component can crack along the at least a portion of the first groove when the battery cell undergoes pressure relief, thereby releasing the internal pressure of the battery cell. The pressure relief component further includes the groove group; the groove group is in one-to-one correspondence with the predetermined pressure relief region; each groove group includes the plurality of second grooves; the plurality of second grooves are spaced apart along the width direction of the second grooves; and the plurality of second grooves in the groove group can all help the predetermined pressure relief region to flip, making the flipping of the predetermined pressure relief region easier, reducing the flipping difficulty of the predetermined pressure relief region, enabling the predetermined pressure relief region to be opened more quickly when the pressure relief component cracks along the first groove, and reducing the risk of fire or explosion when the battery cell undergoes thermal runaway, thereby effectively improving the reliability of the battery cell.

In some embodiments, the predetermined pressure relief region has an opening end and a non-opening end, where the opening end and the non-opening end are oppositely disposed along the width direction of the second groove; and minimum residual thicknesses of the plurality of second grooves in the groove group gradually decrease along a direction from the non-opening end toward the opening end. Among the plurality of second grooves, each second groove can help a portion of the predetermined pressure relief region located between the second groove and the opening end to flip, so that the portion of the predetermined pressure relief region located between the second groove and the opening end can flip around a residual portion of the second groove. The minimum residual thicknesses of the plurality of second grooves gradually decreasing along the direction from the non-opening end toward the opening end helps to enable a portion of the predetermined pressure relief region located between a second groove close to the opening end and the opening end to flip earlier than a portion of the predetermined pressure relief region located between a second groove away from the opening end and the opening end.

In some embodiments, maximum groove depths of the plurality of second grooves in the groove group gradually increase along the direction from the non-opening end toward the opening end. During production, the plurality of second grooves in the groove group may be machined in an order of gradually increasing depth along the direction from the non-opening end toward the opening end, thereby enabling the minimum residual thicknesses of the plurality of second grooves in the groove group to gradually decrease along the direction from the non-opening end toward the opening end.

In some embodiments, a minimum residual thickness of the first groove is smaller than the minimum residual thickness of the second groove, so that the strength of a residual portion of the first groove is smaller than the strength of the residual portion of the second groove, helping the pressure relief component to preferentially crack along the first groove to achieve quick opening of the predetermined pressure relief region.

In some embodiments, the minimum residual thickness of the first groove is D₁, and 0.1 mm ≤ D₁ ≤ 0.5 mm. D₁ ≥ 0.1 mm enables the residual portion of the first groove to have sufficient strength, reducing the risk of the pressure relief component prematurely cracking along the first groove during long-term cycling of the battery cell and prolonging the service life of the battery cell; D₁ ≤ 0.5 mm enables the pressure relief component to crack along the first groove more timely when the battery cell undergoes thermal runaway, reducing the risk of fire or explosion of the battery cell.

In some embodiments, a maximum groove depth of the first groove is greater than the maximum groove depth of the second groove. During production, the depth of the first groove may be machined deeper than the depth of the second groove, reducing the difficulty of enabling the minimum residual thickness of the first groove to be smaller than the minimum residual thickness of the second groove.

In some embodiments, the first groove has two end portions; a line connecting the two end portions is a first connecting line; the first groove and the first connecting line are connected to each other and jointly enclose the predetermined pressure relief region; the predetermined pressure relief region has an opening end and a non-opening end; the first connecting line is located at the non-opening end; the opening end and the non-opening end are oppositely disposed along the width direction of the second groove; a projection of at least one second groove in the groove group along a thickness direction of the first wall portion is located in the predetermined pressure relief region and located between the opening end and the non-opening end along the width direction of the second groove; and the width direction of the second groove is perpendicular to the thickness direction of the first wall portion. In this way, at least two zones of the predetermined pressure relief region flip, thereby reducing an area swept by the predetermined pressure relief region during flipping, reducing a flipping space required for the predetermined pressure relief region, reducing the risk of interference between the predetermined pressure relief region and external components, and improving the reliability of the battery cell.

In some embodiments, a projection of at least one second groove in the groove group along the thickness direction of the first wall portion does not overlap with a projection of the predetermined pressure relief region along the thickness direction of the first wall portion, so that at least one second groove is located outside the predetermined pressure relief region, and a larger zone of the predetermined pressure relief region can flip when the battery cell undergoes thermal runaway, so as to increase an opening area of the predetermined pressure relief region. In addition, the second groove located outside the predetermined pressure relief region can absorb excess material extruded when the first groove is formed to a certain extent, improving the flatness of an outer surface of the housing in the width direction of the second groove; and the second groove located outside the predetermined pressure relief region can also block deformation energy of the housing to a certain extent when the housing is subjected to internal and external impact forces, reducing the risk of premature opening of the predetermined pressure relief region due to the swelling of the battery cell.

In some embodiments, at least one second groove in the groove group is a first guide groove; a projection of the first guide groove along the thickness direction of the first wall portion does not overlap with the projection of the predetermined pressure relief region along the thickness direction of the first wall portion; the first guide groove and the first groove are spaced apart along a width direction of the first guide groove; and two ends of the projection of the first guide groove along the thickness direction of the first wall portion along an extending direction respectively extend beyond the two end portions of the first groove, making the first guide groove longer and enhancing the auxiliary flipping effect of the first guide groove on the predetermined pressure relief region. In addition, this structure can also improve the separation effect of the first guide groove on a surface of the housing in the width direction of the first guide groove from the first groove, improve the absorption effect of the first guide groove on excess material extruded when the first groove is formed, further improve the flatness of the outer surface of the housing in the width direction of the first guide groove, and improve the blocking effect of the first guide groove on deformation energy of the housing when the housing is subjected to internal and external impact forces, further reducing the risk of premature opening of the predetermined pressure relief region due to the swelling of the battery cell.

In some embodiments, projections of all second grooves in the groove group along the thickness direction of the first wall portion are located in the predetermined pressure relief region and located between the opening end and the non-opening end along the width direction of the second grooves, so that more zones of the predetermined pressure relief region flip, further reducing the area swept by the predetermined pressure relief region during flipping and reducing the flipping space required for the predetermined pressure relief region.

In some embodiments, along the thickness direction of the first wall portion, a projection of the second groove does not overlap with a projection of the first groove, reducing mutual influence between the first groove and the second groove during machining, and reducing the risk of the first groove and the second groove being in communication with each other during machining.

In some embodiments, the first groove defines a plurality of predetermined pressure relief regions. When the battery cell undergoes thermal runaway, the plurality of predetermined pressure relief regions can all be opened; and under the condition that a total pressure relief area of the pressure relief component is specified, an opening velocity of the predetermined pressure relief regions can be increased, and pressure relief can be achieved more quickly.

In some embodiments, the first wall portion is a rectangular wall portion; and the plurality of second grooves in the groove group are spaced apart along a width direction of the first wall portion. When the first wall portion deforms due to the swelling of the battery cell, the deformation amount of the first wall portion in the width direction is smaller than that in a length direction of the first wall portion. The plurality of second grooves in the groove group being spaced apart along the width direction of the first wall portion can reduce the influence of deformation of the first wall portion on the second groove and reduce the risk of fatigue cracking of the pressure relief component along the second groove during the normal cycle life of the battery cell.

In some embodiments, along the thickness direction of the first wall portion, the pressure relief component has a first surface and a second surface opposite each other; the first groove is recessed from the first surface in a direction approaching the second surface, and the second groove is recessed from the second surface in a direction approaching the first surface. The first groove and the second groove are respectively located on two sides of the pressure relief component along the thickness direction of the first wall portion, facilitating machining of the first groove and the second groove on the two sides of the pressure relief component respectively, and helping to reduce mutual influence between the first groove and the second groove during machining.

In some embodiments, along the thickness direction of the first wall portion, the pressure relief component has a first surface and a second surface opposite each other; and both the first groove and the second groove are recessed from the first surface in a direction approaching the second surface. In this way, the first groove and the second groove are provided on a same side of the pressure relief component in the thickness direction, making it easier to machine the first groove and the second groove on the pressure relief component. The first groove and the second groove can be machined without flipping the pressure relief component, helping to optimize the production rhythm of the battery cell.

In some embodiments, the first surface is a surface of the pressure relief component facing the exterior of the battery cell; and the second surface is a surface of the pressure relief component facing the interior of the battery cell. When the first groove is provided on the first surface, the first groove is provided on an outer side of the pressure relief component, facilitating machining and forming of the first groove on the exterior of the housing, and helping to reduce the forming difficulty of the first groove, thereby improving the production efficiency of the battery cell. When the second groove is provided on the first surface, the second groove is provided on the outer side of the pressure relief component, facilitating machining and forming of the second groove on the exterior of the housing, and helping to reduce the forming difficulty of the second groove. When the second groove is provided on the second surface, the second groove is provided on the inner side of the pressure relief component. Thus, on the one hand, two groove side surfaces in the width direction of the second grooves are less likely to abut against each other during the process of the predetermined pressure relief region flipping outward to be opened, helping to increase the opening area of the predetermined pressure relief region; on the other hand, the second groove is not exposed to the exterior of the battery cell, reducing the risk of oxidation and corrosion of the pressure relief component in a region where the second groove is located.

In some embodiments, the first groove includes a plurality of levels of grooves sequentially disposed along a direction from the first surface toward the second surface; and along the thickness direction of the first wall portion, in two adjacent levels of grooves, a level of groove away from the first surface is provided on a groove bottom surface of a level of groove close to the first surface. The first groove is configured as a plurality of levels of grooves arranged along the thickness direction of the first wall portion, so that when the first groove is formed, the levels of grooves can be machined one by one along the direction from the first surface toward the second surface, reducing the forming depth of each level of groove, reducing the forming force applied to the pressure relief component when the first groove is formed, and reducing the risk of damage to the pressure relief component when the first groove is formed.

In some embodiments, the first groove includes a plurality of groove segments; the plurality of groove segments are connected to each other; and the plurality of groove segments jointly define the at least one predetermined pressure relief region. A predetermined pressure relief region with a larger area can be defined by the plurality of groove segments, helping to increase a pressure relief area of the battery cell.

In some embodiments, the plurality of groove segments include a first groove segment and a second groove segment; the first groove segment is connected to the second groove segment; and the first groove segment and the second groove segment jointly define at least one predetermined pressure relief region. The first groove of this structure has a simple structure, and a connection position of the first groove segment and the second groove segment has a greater stress concentration factor, is weaker, and is more likely to crack, so that after the pressure relief component cracks from the connection position of the first groove segment and the second groove segment when the battery cell undergoes thermal runaway, the pressure relief component can quickly crack along the first groove segment and the second groove segment, enabling the predetermined pressure relief region to be opened more quickly for timely pressure relief.

In some embodiments, the plurality of groove segments include a first groove segment, a second groove segment, and a third groove segment; the second groove segment and the third groove segment are oppositely disposed; the plurality of second grooves in the groove group are located on a same side of the first groove segment in a width direction; the first groove segment is connected to the second groove segment and the third groove segment; and the first groove segment, the second groove segment, and the third groove segment jointly define the at least one predetermined pressure relief region. The first groove of this structure makes an intersection position of the first groove segment and the second groove segment and a connection position of the first groove segment and the third groove segment weaker and more likely to crack and open the predetermined pressure relief region for pressure relief, and can further increase the opening area of the predetermined pressure relief region, thereby increasing the pressure relief area of the battery cell and improving the pressure relief velocity of the battery cell.

In some embodiments, a connection position of the second groove segment and the first groove segment is deviated from two ends of the second groove segment, and a connection position of the third groove segment and the first groove segment is deviated from two ends of the third groove segment, so as to form predetermined pressure relief regions on both sides of the first groove segment. In this way, the first groove segment of the first groove is located between two predetermined pressure relief regions; and after the pressure relief component cracks along the first groove segment, the two predetermined pressure relief regions can be opened in an opposite-opening manner for pressure relief when the battery cell undergoes pressure relief, enabling the two predetermined pressure relief regions to be opened quickly, and helping to improve the pressure relief velocity of the battery cell.

In some embodiments, the groove segment extends along a straight or arc trajectory. If the groove segment extends along a straight trajectory, the groove segment is a straight groove, which can reduce the forming difficulty of the groove segment. If the groove segment extends along an arc trajectory, the groove segment is an arc-shaped groove, and the pressure relief component is more likely to crack along the groove segments when the battery cell undergoes pressure relief, achieving quicker opening of the predetermined pressure relief region.

In some embodiments, the first groove extends along an arc trajectory. The first groove of this structure includes only one groove segment, simplifying the structure of the first groove.

In some embodiments, the second groove extends along a straight trajectory. The second groove has a simple structure and is easy to machine and form.

In some embodiments, the pressure relief component is integrally formed with the first wall portion, so that the first groove and the second groove can be directly formed on the first wall portion to form an integral pressure relief structure with higher reliability, eliminating the mounting process of the pressure relief component, thereby providing better economy.

In some embodiments, the first groove is stamped and formed on the first wall portion; and/or the second groove is stamped and formed on the first wall portion. If the first groove is stamped and formed on the first wall portion, the forming method of the first groove is simple, helping to reduce the production cost of the battery cell. If the second groove is stamped and formed on the first wall portion, the forming method of the second groove is simple, helping to reduce the production cost of the battery cell.

In some embodiments, the pressure relief component is separated from the first wall portion, and the pressure relief component is mounted on the first wall portion. The pressure relief component is a component independent of the housing, and the pressure relief component and the housing can be separately produced and assembled, so that the production difficulty is low, and the production efficiency is high.

In some embodiments, the housing includes a housing body and an end cover, where the housing body has an opening formed on at least one end; the end cover is in one-to-one correspondence with the opening; the end cover seals the opening; and at least one end cover is the first wall portion. At least one end cover has a pressure relief function, and the difficulty of forming the first groove and the second groove on the end cover or the difficulty of mounting the pressure relief component is lower.

In some embodiments, the housing includes a housing body and an end cover, where the housing body has an opening formed on at least one end; the end cover is in one-to-one correspondence with the opening; the end cover seals the opening; and at least one wall portion in the housing body is the first wall portion, so that the housing body has a pressure relief function, and when the battery cell undergoes pressure relief, emissions discharged from the interior of the battery cell are less likely to affect external components outside the end cover, reducing the risk of damage to the external components by the emissions.

In some embodiments, the housing body has an opening formed on only one end; and a wall portion of the housing body opposite the end cover is the first wall portion. The housing body has a structure with an opening formed on one end, making the overall structure of the battery cell simpler. The first wall portion is the wall portion of the housing body opposite the end cover, which can achieve directional pressure relief from the bottom of the housing body.

In some embodiments, the housing body has openings formed on two opposite ends. The housing body has a structure with openings formed on two opposite ends, and an electrode assembly can be assembled into the housing body through any one of the openings, which can reduce the assembly difficulty of the battery cell and improve the assembly quality of the battery cell. The housing body of this structure can be made longer (the housing body has openings formed on two ends in the length direction), helping to increase the electric capacity of the battery cell.

In some embodiments, a material of the pressure relief component includes a steel material. Steel has the characteristic of high strength, and the pressure relief component made of steel has better strength, so that under the condition that the burst pressure of the battery cell is specified, the pressure relief component can be made thinner, reducing the volume of the pressure relief component.

In some embodiments, the steel material is carbon steel or stainless steel.

In some embodiments, the material of the pressure relief component includes an aluminum alloy. The aluminum alloy has the characteristics of light weight and good ductility, making it easier to machine the first groove and the second groove on the pressure relief component.

In some embodiments, the aluminum alloy includes the following components by mass percentage: aluminum ≥ 99.6%, copper ≤ 0.05%, iron ≤ 0.35%, magnesium ≤ 0.03%, manganese ≤ 0.03%, silicon ≤ 0.25%, titanium ≤ 0.03%, vanadium ≤ 0.05%, zinc ≤ 0.05%, and each of other elements ≤ 0.03%. This aluminum alloy has lower hardness and better formability, reducing the machining difficulty of the first groove and the second groove, and helping to improve the machining accuracy of the first groove and the second groove and improve the pressure relief consistency of the pressure relief component.

In some embodiments, the aluminum alloy includes the following components by mass percentage: aluminum ≥ 96.7%, 0.05% ≤ copper ≤ 0.2%, iron ≤ 0.7%, manganese ≤ 1.5%, silicon ≤ 0.6%, zinc ≤ 0.1%, each of other elements ≤ 0.05%, and total of other elements ≤ 0.15%. The pressure relief component made of this aluminum alloy has higher hardness, greater strength, and high resistance to damage.

According to a second aspect, embodiments of the present application provide a battery including the battery cell according to any one of the embodiments of the first aspect.

According to a third aspect, embodiments of the present application provide an electric device including the battery cell according to any one of the embodiments of the first aspect, where the battery cell is configured to provide electrical energy for the electric device.

### BRIEF DESCRIPTION OF THE DRAWINGS

In order to more clearly illustrate the technical solutions of the embodiments of the present application, the drawings required in the embodiments will be briefly introduced below. It should be understood that the following drawings illustrate only some embodiments of the present application and therefore should not be considered as limiting the scope. For those of ordinary skill in the art, other related drawings can be obtained according to these drawings without creative efforts.
FIG. 1 is a schematic structural diagram of a vehicle according to some embodiments of the present application;
FIG. 2 is an exploded view of a battery according to some embodiments of the present application;
FIG. 3 is an exploded view of a battery cell according to some embodiments of the present application;
FIG. 4 is an assembly view of the battery cell shown in FIG. 3;
FIG. 5 is a partial view of a housing shown in FIG. 4;
FIG. 6 is a cross-sectional view along A-A of the housing shown in FIG. 5;
FIG. 7 is a partially enlarged view at B in FIG. 6;
FIG. 8 is a cross-sectional view of the housing shown in FIG. 6 (with a portion of a predetermined pressure relief region opened);
FIG. 9 is a cross-sectional view of the housing shown in FIG. 6 (with an entire predetermined pressure relief region opened);
FIG. 10 is a partial view of a housing according to some embodiments of the present application;
FIG. 11 is a cross-sectional view of a housing according to some embodiments of the present application;
FIG. 12 is a partial view of a housing according to some other embodiments of the present application;
FIG. 13 is a cross-sectional view along C-C of the housing shown in FIG. 12;
FIG. 14 is a partially enlarged view at D in FIG. 13;
FIG. 15 is a partial view of a housing according to still some other embodiments of the present application;
FIG. 16 is a cross-sectional view along F-F of the housing shown in FIG. 15;
FIG. 17 is a partial view of a housing according to yet some other embodiments of the present application;
FIG. 18 is a cross-sectional view along G-G of the housing shown in FIG. 17;
FIG. 19 is an exploded view of a housing according to some embodiments of the present application (where a housing body has an opening formed on one end, and an end cover is a first wall portion);
FIG. 20 is an exploded view of a housing according to some other embodiments of the present application (where a housing body has an opening formed on one end, and an end cover is a first wall portion);
FIG. 21 is an exploded view of a housing according to some embodiments of the present application (where a housing body has an opening formed on one end, and the housing body includes a first wall portion);
FIG. 22 is an exploded view of a housing according to some other embodiments of the present application (where a housing body has an opening formed on one end, and the housing body includes a first wall portion); and
FIG. 23 is an exploded view of a battery cell according to some other embodiments of the present application.

Reference signs: 1. housing; 11. housing body; 12. end cover; 13. first wall portion; 131. pressure relief hole; 14. second wall portion; 15. third wall portion; 2. electrode assembly; 21. tab; 3. electrode terminal; 4. current collecting member; 5. insulating member; 6. pressure relief component; 61. first groove; 611. groove segment; 611a. first groove segment; 611b. second groove segment; 611c. third groove segment; 62. groove group; 621. second groove; 621a. first guide groove; 63. predetermined pressure relief region; 631. opening end; 632. non-opening end; 64. first surface; 65. second surface; 10. battery cell; 20. box; 201. first portion; 202. second portion; 100. battery; 200. controller; 300. motor; 1000. vehicle; W. first connecting line; X. thickness direction of first wall portion; Y. length direction of first wall portion; and Z. width direction of first wall portion.

### DESCRIPTION OF EMBODIMENTS

In order to make the objects, technical solutions, and advantages of the embodiments of the present application more clearly understood, the technical solutions in the embodiments of the present application will be clearly described below in conjunction with the drawings in the embodiments of the present application. Obviously, the described embodiments are some of the embodiments of the present application rather than all of the embodiments. Based on the embodiments in the present application, all other embodiments obtained by those of ordinary skill in the art without creative efforts fall within the protection scope of the present application.

Unless otherwise defined, all technical and scientific terms used in the present application have the same meaning as commonly understood by those of ordinary skill in the technical field to which the present application belongs. The terms used in the specification of the present application are for the purpose of describing specific embodiments only and are not intended to limit the present application. The terms "include", "have", and any variations thereof in the specification and claims of the present application and the above description of the drawings are intended to cover non-exclusive inclusion. The terms "first", "second", and the like in the specification and claims of the present application or the above drawings are used to distinguish different objects and are not used to describe a specific order or primary-secondary relationship.

In the present application, reference to "embodiment" in the specification means that specific features, structures, or characteristics described with reference to an embodiment may be included in at least one embodiment of the present application. The word "embodiment" appearing in various places in this specification does not necessarily refer to the same embodiment or an independent or alternative embodiment that is exclusive of other embodiments.

In the description of the present application, it should be noted that unless otherwise specified and defined explicitly, the terms "mounting", "connection", "join", and "attachment" should be understood in their general senses. For example, they may refer to a fixed connection, a detachable connection, or an integral connection, and may refer to a direct connection, an indirect connection via an intermediate medium, or an internal communication between two elements. For those of ordinary skill in the art, the specific meanings of the above terms in the present application can be understood according to specific situations.

The "and/or" in the present application is only an associative relationship for describing associated objects, indicating that three relationships may be present. For example, A and/or B may indicate the following three cases: presence of only A; presence of both A and B; and presence of only B. In addition, the character "/" in the present application generally indicates that the associated objects before and after are in an "or" relationship.

In the embodiments of the present application, the same reference numerals denote the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of an integrated apparatus, are merely illustrative and should not constitute any limitation on the present application.

The term "a plurality of" appearing in the present application refers to two or more (including two).

In the embodiments of the present application, a battery cell may be a secondary battery, and the secondary battery refers to a battery cell that can continue to be used by activating an active material through charging after the battery cell is discharged.

The battery cell includes but is not limited to a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead-acid battery, and the like.

The battery cell typically includes an electrode assembly. The electrode assembly includes a positive electrode, a negative electrode, and a separator. During the charging and discharging process of the battery cell, active ions (for example, lithium ions) are intercalated and deintercalated back and forth between the positive electrode and the negative electrode. The separator is disposed between the positive electrode and the negative electrode, can reduce the risk of short circuit between the positive electrode and the negative electrode, and can allow active ions to pass through.

In some embodiments, the positive electrode may be a positive electrode plate, and the positive electrode plate may include a positive electrode current collector and a positive electrode active material disposed on at least one surface of the positive electrode current collector.

As an example, the positive electrode current collector has two surfaces opposite in its own thickness direction, and the positive electrode active material is disposed on either or both of the two opposite surfaces of the positive electrode current collector.

As an example, the positive electrode current collector may employ a metal foil or a composite current collector. For example, as the metal foil, aluminum subjected to surface silver plating treatment, stainless steel subjected to surface silver plating treatment, stainless steel, copper, aluminum, nickel, carbon electrode, carbon, nickel, or titanium may be used. The composite current collector may include a polymer substrate layer and a metal layer. The composite current collector may be formed by forming a metal material (aluminum, aluminum alloy, nickel, nickel alloy, titanium, titanium alloy, silver, silver alloy, or the like) on a polymer substrate (such as a substrate of polypropylene, polyethylene terephthalate, polybutylene terephthalate, polystyrene, or polyethylene).

As an example, the positive electrode active material may include at least one of the following materials: lithium-containing phosphate, lithium transition metal oxide, and their respective modified compounds. However, the present application is not limited to these materials, and other conventional materials that can be used as positive electrode active materials of batteries may also be used. These positive electrode active materials may be used alone or in combination of two or more. Examples of the lithium-containing phosphate may include, but are not limited to, at least one of lithium iron phosphate (for example, LiFePO₄ (also abbreviated as LFP)), a composite material of lithium iron phosphate and carbon, lithium manganese phosphate (for example, LiMnPO₄), a composite material of lithium manganese phosphate and carbon, lithium iron manganese phosphate, and a composite material of lithium iron manganese phosphate and carbon. Examples of the lithium transition metal oxide may include, but are not limited to, at least one of lithium cobalt oxide (for example, LiCoO₂), lithium nickel oxide (for example, LiNiO₂), lithium manganese oxide (for example, LiMnO₂, LiMn₂O₄), lithium nickel cobalt oxide, lithium manganese cobalt oxide, lithium nickel manganese oxide, lithium nickel manganese cobalt oxide (for example, LiNi_{1/3}Co_{1/3}Mn_{1/3}O₂ (also abbreviated as NCM333), LiNi_{0.5}Co_{0.2}Mn_{0.3}O₂ (also abbreviated as NCM523), LiNi_{0.5}Co_{0.25}Mn_{0.25}O₂ (also abbreviated as NCM211), LiNi_{0.6}Co_{0.2}Mn_{0.2}O₂ (also abbreviated as NCM622), or LiNi_{0.8}Co_{0.1}Mn_{0.1}O₂ (also abbreviated as NCM811)), lithium nickel cobalt aluminum oxide (for example, LiNi_{0.85}Co_{0.15}Al_{0.05}O₂), their modified compounds, and the like.

In some embodiments, the positive electrode may employ metal foam. The metal foam may be nickel foam, copper foam, aluminum foam, foam alloy, or the like. When the metal foam is used as the positive electrode, the surface of the metal foam may not be provided with a positive electrode active material, and certainly, a positive electrode active material may also be provided. As an example, a lithium source material, potassium metal, or sodium metal may also be filled or/and deposited in the metal foam, and the lithium source material is lithium metal and/or a lithium-rich material.

In some embodiments, the negative electrode may be a negative electrode plate, and the negative electrode plate may include a negative electrode current collector.

As an example, the negative electrode current collector may employ a metal foil, metal foam, or a composite current collector. For example, as the metal foil, aluminum or stainless steel subjected to surface silver plating treatment, stainless steel, copper, aluminum, nickel, carbon electrode, carbon, nickel, or titanium may be used. The metal foam may be nickel foam, copper foam, aluminum foam, foam alloy, or the like. The composite current collector may include a polymer substrate layer and a metal layer. The composite current collector may be formed by forming a metal material (copper, copper alloy, nickel, nickel alloy, titanium, titanium alloy, silver, silver alloy, or the like) on a polymer material substrate (such as a substrate of polypropylene, polyethylene terephthalate, polybutylene terephthalate, polystyrene, and polyethylene).

As an example, the negative electrode plate may include a negative electrode current collector and a negative electrode active material disposed on at least one surface of the negative electrode current collector.

As an example, the negative electrode current collector has two surfaces opposite in its own thickness direction, and the negative electrode active material is disposed on either or both of the two opposite surfaces of the negative electrode current collector.

As an example, the negative electrode active material may employ a negative electrode active material known in the art for battery cells. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and silicon alloy. The tin-based material may be selected from at least one of elemental tin, a tin-oxygen compound, and tin alloy. However, the present application is not limited to these materials, and other conventional materials that can be used as negative electrode active materials of batteries may also be used. These negative electrode active materials may be used alone or in combination of two or more.

In some embodiments, the material of the positive electrode current collector may be aluminum, and the material of the negative electrode current collector may be copper.

In some embodiments, the separator is a separation film. The separation film may be any known porous structure separation film with good chemical stability and mechanical stability.

As an example, the material of the separation film may include at least one of glass fiber, non-woven fabric, polyethylene, polypropylene, and polyvinylidene fluoride. The separation film may be a single-layer film or a multi-layer composite film. When the separation film is a multi-layer composite film, layers may be made of the same or different materials. The separator may be a separate component located between the positive and negative electrodes, or may be attached to a surface of the positive electrode or the negative electrode.

In some embodiments, the separator is a solid electrolyte. The solid electrolyte is disposed between the positive electrode and the negative electrode and plays the role of transporting ions and separating the positive and negative electrodes.

In some embodiments, the battery cell further includes an electrolyte, and the electrolyte plays the role of conducting ions between the positive and negative electrodes. The electrolyte may be in a liquid state, a gel state, or a solid state. The liquid electrolyte includes an electrolytic salt and a solvent.

In some embodiments, the electrolytic salt may include at least one of lithium hexafluorophosphate, lithium tetrafluoroborate, lithium perchlorate, lithium hexafluoroarsenate, lithium difluorosulfonimide, lithium bis(trifluoromethanesulfonyl)imide, lithium trifluoromethanesulfonate, lithium difluorophosphate, lithium difluoro(oxalato)borate, lithium bis(oxalato)borate, lithium difluoro(bis(oxalato)phosphate), and lithium tetrafluoro(oxalato)phosphate.

In some embodiments, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. The solvent may alternatively be an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

The gel electrolyte includes a polymer as a framework network of the electrolyte, combined with an ionic liquid-lithium salt.

The solid electrolyte includes a polymer solid electrolyte, an inorganic solid electrolyte, and a composite solid electrolyte.

As an example, the polymer solid electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, or the like.

As an example, the inorganic solid electrolyte may include one or more of an oxide solid electrolyte (crystalline perovskite, a sodium superionic conductor, garnet, an amorphous LiPON film), a sulfide solid electrolyte (a crystalline lithium superionic conductor (lithium germanium phosphorus sulfur or argyrodite), or amorphous sulfide), a halide solid electrolyte, a nitride solid electrolyte, and a hydride solid electrolyte.

As an example, the composite solid electrolyte is formed by adding an inorganic solid electrolyte filler to the polymer solid electrolyte.

In some embodiments, the electrode assembly is a wound structure. The positive electrode plate and the negative electrode plate are wound into a wound structure.

In some embodiments, the electrode assembly is a laminated structure.

As an example, a plurality of positive electrode plates and a plurality of negative electrode plates may be respectively provided. The plurality of positive electrode plates and the plurality of negative electrode plates are alternately laminated.

As an example, a plurality of positive electrode plates may be provided. The negative electrode plate is folded to form a plurality of laminated folded segments. One positive electrode plate is sandwiched between adjacent folded segments.

As an example, both the positive electrode plate and the negative electrode plate are folded to form a plurality of laminated folded segments.

As an example, a plurality of separators may be provided and respectively disposed between any adjacent positive electrode plates or negative electrode plates.

As an example, the separators may be continuously provided and disposed between any adjacent positive electrode plates or negative electrode plates by folding or winding.

In some embodiments, the shape of the electrode assembly may be cylindrical, flat, polygonal prism, or the like.

In some embodiments, the electrode assembly is provided with tabs, and the tabs can lead current out of the electrode assembly. The tabs include a positive tab and a negative tab.

In some embodiments, the battery cell may include a housing. The housing is configured to encapsulate the electrode assembly, the electrolyte, and other components. The housing may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch battery cell, or a battery cell of another shape. The prismatic battery cell includes a square-shell battery cell, a blade-shaped battery cell, and a polygonal prism battery. For example, the polygonal prism battery is a hexagonal prism battery.

The battery mentioned in the embodiments of the present application refers to a single physical module including one or more battery cells to provide higher voltage and capacity.

In some embodiments, the battery may be a battery module. When there are a plurality of battery cells, the plurality of battery cells are arranged and fixed to form a battery module.

In some embodiments, the battery may be a battery pack. The battery pack includes a box and a battery cell. The battery cell or the battery module is accommodated in the box.

In some embodiments, the box may serve as a part of the chassis structure of a vehicle. For example, a portion of the box may become at least a portion of the floor of the vehicle, or a portion of the box may become at least a portion of a crossbeam and longitudinal beam of the vehicle.

In some embodiments, the battery may be an energy storage apparatus. The energy storage apparatus includes an energy storage container, an energy storage electric cabinet, and the like.

The development of battery technology needs consideration of multiple design factors simultaneously, such as energy density, cycle life, discharge capacity, charge-discharge rate, and other performance parameters, and also needs consideration of the safety of the battery.

In order to improve the reliability of the battery cell, a pressure relief component is typically provided in the battery cell. The pressure relief component may be a portion of the housing of the battery cell or a component mounted on the housing. When the battery cell undergoes thermal runaway, the internal pressure of the battery cell can be released through the pressure relief component.

For a typical battery cell, a first groove may be provided on the pressure relief component. At least one predetermined pressure relief region is defined by the first groove. The pressure relief component can crack along at least a portion of the first groove when the battery cell undergoes pressure relief, so that the predetermined pressure relief region of the pressure relief component can be opened for pressure relief to release the internal pressure of the battery cell. In such a battery cell, when the battery cell undergoes thermal runaway, the opening difficulty of the predetermined pressure relief region during the process of the pressure relief component cracking along the first groove is relatively high, affecting the opening speed of the predetermined pressure relief region, and causing the battery cell to be prone to fire or explosion, thus resulting in poor reliability of the battery cell.

Based on the above considerations, in order to solve the problem of poor reliability of the battery, embodiments of the present application provide a battery cell. A groove group is provided on the pressure relief component. The groove group is in one-to-one correspondence with the predetermined pressure relief region. Each groove group includes a plurality of second grooves. The plurality of second grooves are spaced apart along a width direction of the second grooves. The second groove is configured to guide at least a portion of the predetermined pressure relief region to flip so as to open the at least a portion of the predetermined pressure relief region.

In such a battery cell, the plurality of second grooves in the groove group can all help the predetermined pressure relief region to flip, making the flipping of the predetermined pressure relief region easier, reducing the flipping difficulty of the predetermined pressure relief region, enabling the predetermined pressure relief region to be opened more quickly when the pressure relief component cracks along the first groove, and reducing the risk of fire or explosion when the battery cell undergoes thermal runaway, thereby effectively improving the reliability of the battery cell.

The technical solution described in the embodiments of the present application is applicable to a battery and an electric device using the battery.

The electric device may be a vehicle, a mobile phone, a portable device, a laptop computer, a ship, a spacecraft, an electric toy, an electric tool, or the like. The vehicle may be a fuel vehicle, a gas vehicle, or a new energy vehicle. The new energy vehicle may be a battery electric vehicle, a hybrid vehicle, an extended-range vehicle, or the like. The spacecraft includes an airplane, a rocket, a space shuttle, a spaceship, or the like. The electric toy includes a stationary or mobile electric toy, for example, a game console, an electric toy car, an electric toy ship, or an electric toy airplane. The electric tool includes a metal cutting electric tool, a grinding electric tool, an assembly electric tool, and a railway electric tool, for example, an electric drill, an electric grinder, an electric wrench, an electric screwdriver, an electric hammer, an impact drill, a concrete vibrator, or an electric planer.

For ease of description, the following embodiments are described below by taking the electric device as a vehicle as an example.

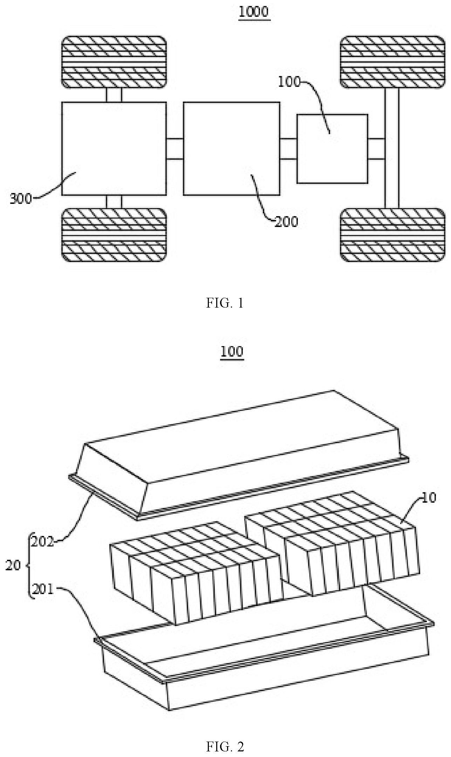

Referring to FIG. 1, FIG. 1 is a schematic structural diagram of a vehicle 1000 according to some embodiments of the present application. A battery 100 is provided inside the vehicle 1000. The battery 100 may be disposed at the bottom, head, or tail of the vehicle 1000. The battery 100 may be configured to supply power to the vehicle 1000. For example, the battery 100 may serve as an operating power source of the vehicle 1000.

The vehicle 1000 may further include a controller 200 and a motor 300. The controller 200 is configured to control the battery 100 to supply power to the motor 300, for example, to satisfy power needs of start, navigation, and driving of the vehicle 1000.

In some embodiments of the present application, the battery 100 can not only serve as the operating power source of the vehicle 1000, but also serve as a driving power source of the vehicle 1000, replacing or partially replacing fuel or natural gas to provide driving power for the vehicle 1000.

Referring to FIG. 2, FIG. 2 is an exploded view of a battery 100 according to some embodiments of the present application. The battery 100 includes a battery cell 10 and a box 20. The battery cell 10 is accommodated in the box 20.

The box 20 is a component for accommodating the battery cell 10, the box 20 provides an accommodation space for the battery cell 10, and the box 20 may adopt various structures. In some embodiments, the box 20 may include a first portion 201 and a second portion 202. The first portion 201 and the second portion 202 fit each other to define the accommodation space for accommodating the battery cell 10. The first portion 201 and the second portion 202 may be in various shapes such as a cuboid shape and a cylindrical shape. The first portion 201 may be a hollow structure with one side open, and the second portion 202 may also be a hollow structure with one side open. The open side of the second portion 202 covers the open side of the first portion 201, thereby forming the box 20 with the accommodation space. Alternatively, the first portion 201 is a hollow structure with one side open, the second portion 202 is a plate-shaped structure, and the second portion 202 covers the open side of the first portion 201, thereby forming the box 20 with the accommodation space. The first portion 201 and the second portion 202 may be sealed by a sealing element. The sealing element may be a sealing ring, a sealant, or the like.

In the battery 100, there may be one or more battery cells 10. If there are a plurality of battery cells 10, the plurality of battery cells 10 may be connected in series, parallel, or series-parallel, where being connected in series-parallel means a combination of series and parallel connections of the plurality of battery cells 10. Alternatively, a plurality of battery cells 10 may be first connected in series, parallel, or series-parallel to form a battery module, and then a plurality of battery modules are connected in series, parallel, or series-parallel to form an entirety accommodated in the box 20. Alternatively, all the battery cells 10 are directly connected series, parallel, or series-parallel, and then an entirety formed by all the battery cells 10 is accommodated in the box 20.

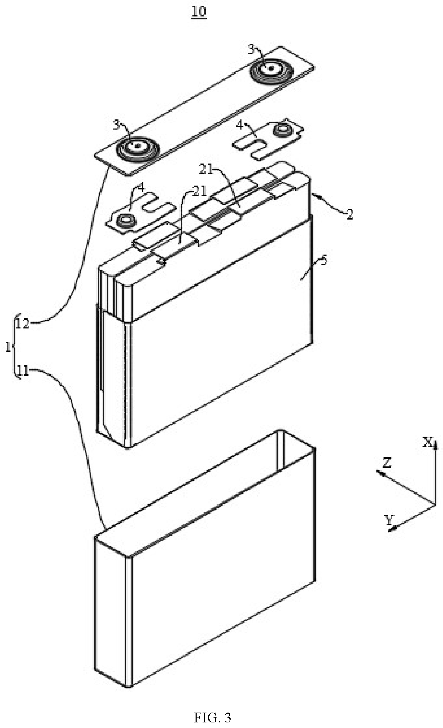

Referring to FIG. 3, FIG. 3 is an exploded view of a battery cell 10 according to some embodiments of the present application. The battery cell 10 may include a housing 1 and an electrode assembly 2. The electrode assembly 2 is accommodated in the housing 1.

In some embodiments, the housing 1 may include a housing body 11 and an end cover 12. The housing body 11 has an opening. The end cover 12 seals the opening of the housing body 11.

The housing body 11 is a component for accommodating the electrode assembly 2. The housing body 11 may be a hollow structure with an opening formed on one end, or the housing body 11 may be a hollow structure with openings formed on two opposite ends. The housing body 11 may be in various shapes such as a cylindrical shape and a cuboid shape. The housing body 11 may be made of various materials such as copper, iron, aluminum, steel, and aluminum alloy.

The end cover 12 is a component that seals the opening of the housing body 11 to isolate an internal environment of the battery cell 10 from an external environment. The end cover 12 and the housing body 11 jointly define an accommodation space for accommodating the electrode assembly 2, an electrolyte, and other components. The end cover 12 may be connected to the housing body 11 by welding or crimping to seal the opening of the housing body 11. The shape of the end cover 12 may be adapted to the shape of the housing 1. For example, the housing body 11 is a cuboid structure, and the end cover 12 is a rectangular plate-shaped structure adapted to the housing 1. For another example, the housing body 11 is a cylindrical structure, and the end cover 12 is a circular plate-shaped structure adapted to the housing body 11. The end cover 12 may also be made of various materials such as copper, iron, aluminum, steel, aluminum alloy, and plastic. The materials of the end cover 12 and the housing body 11 may be the same or different.

In the embodiments where the housing body 11 has an opening formed on one end, one end cover 12 may be correspondingly provided. In the embodiments where the housing body 11 has openings formed on two opposite ends, two end covers 12 may be correspondingly provided, where the two end covers 12 respectively seal the two openings of the housing body 11, and the two end covers 12 and the housing body 11 jointly define the accommodation space.

In some embodiments, the battery cell 10 may further include an electrode terminal 3. The electrode terminal 3 is disposed on the housing 1. The electrode terminal 3 is configured to be electrically connected to a tab 21 of the electrode assembly 2 to input or output electrical energy of the battery cell 10. The electrode terminal 3 may be disposed on the housing body 11 of the housing 1 or on the end cover 12 of the housing 1. The electrode terminal 3 may be directly connected to the tab 21. For example, the electrode terminal 3 is directly welded to the tab 21. The electrode terminal 3 may alternatively be indirectly connected to the tab 21. For example, the electrode terminal 3 is indirectly connected to the tab 21 through a current collecting member 4. The current collecting member 4 may be a metal conductor, such as copper, iron, aluminum, steel, or aluminum alloy.

As an example, as shown in FIG. 3, the housing body 11 has an opening formed on one end. One end cover 12 is provided in the housing 1. One end cover 12 seals one opening of the housing body 11. Two electrode terminals 3 are disposed on the end cover 12. The two electrode terminals 3 are respectively a positive electrode terminal 3 and a negative electrode terminal 3. One end of the electrode assembly 2 facing the end cover 12 is formed with a positive tab 21 and a negative tab 21. The positive electrode terminal 3 is connected to the positive tab 21 through one current collecting member 4. The negative electrode terminal 3 is electrically connected to the negative tab 21 through another current collecting member 4.

In some embodiments, still referring to FIG. 3, the battery cell 10 may further include an insulating member 5. The insulating member 5 is a component for separating the housing body 11 and the electrode assembly 2. Insulated isolation between the housing body 11 and the electrode assembly 2 is achieved through the insulating member 5. The insulating member 5 is made of an insulating material. The material of the insulating member 5 includes but is not limited to: plastic, rubber, and the like.

As an example, the insulating member 5 covers an outer side of the electrode assembly 2 along a circumferential direction of the opening of the housing body 11. One or more electrode assemblies 2 in the housing 1 may be provided. If there is one electrode assembly 2, the insulating member 5 covers the periphery of the electrode assembly 2. If there are a plurality of electrode assemblies 2, one insulating member 5 may be correspondingly provided on one electrode assembly 2. Each insulating member 5 covers the periphery of one electrode assembly 2. Alternatively, a plurality of electrode assemblies 2 may be used as an integral component, and the insulating member 5 covers the periphery of the integral component.

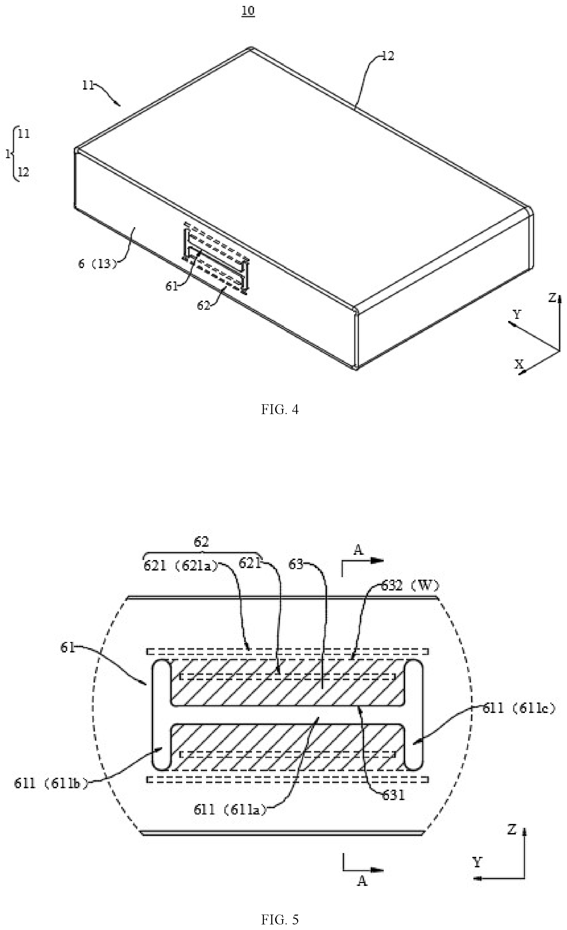

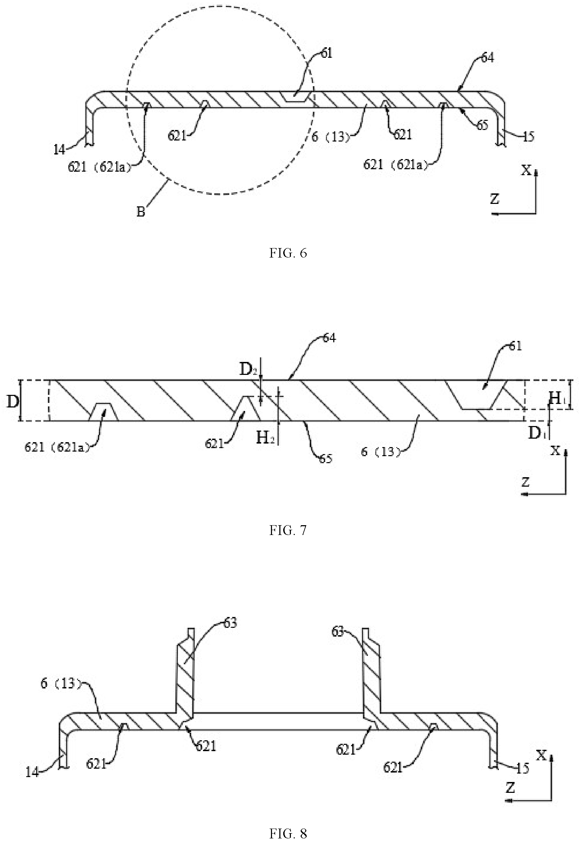

Referring to FIGs. 4 to 7, FIG. 4 is an assembly view of the battery cell 10 shown in FIG. 3; FIG. 5 is a partial view of a housing 1 shown in FIG. 4; FIG. 6 is a cross-sectional view along A-A of the housing 1 shown in FIG. 5; and FIG. 7 is a partially enlarged view at B in FIG. 6. Embodiments of the present application provide a battery cell 10 including a housing 1 and a pressure relief component 6, where the housing 1 includes a first wall portion 13. The pressure relief component 6 is disposed on the first wall portion 13. The pressure relief component 6 includes a first groove 61. The first groove 61 defines at least one predetermined pressure relief region 63. The pressure relief component 6 is configured to be capable of cracking along at least a portion of the first groove 61 when the battery cell 10 undergoes pressure relief.

The pressure relief component 6 further includes a groove group 62. The groove group 62 is in one-to-one correspondence with the predetermined pressure relief region 63. Each groove group 62 includes a plurality of second grooves 621. The plurality of second grooves 621 are spaced apart along a width direction of the second grooves 621. The second groove 621 is configured to guide at least a portion of the predetermined pressure relief region 63 to flip so as to open the at least a portion of the predetermined pressure relief region 63.

The housing 1 may include a plurality of wall portions. The plurality of wall portions jointly define an accommodation space inside the housing 1 to accommodate the battery cell 10, an electrolyte, and other components. The other components may be components such as a current collecting member 4 and an insulating member 5. In the plurality of wall portions of the housing 1, one wall portion may be the first wall portion 13, or a plurality of wall portions may each be the first wall portion 13. In an example where the housing 1 is in a cuboid shape, there are six wall portions in the housing 1, where one, two, three, four, five, or six wall portions may be the first wall portion 13. In the housing 1, at least one end cover 12 may be the first wall portion 13, or at least one wall portion in the housing body 11 may be the first wall portion 13.

The pressure relief component 6 is a component in the battery cell 10 for releasing the internal pressure of the battery cell 10. The pressure relief component 6 is disposed on the first wall portion 13. The pressure relief component 6 and the first wall portion 13 may be integrally formed, or the pressure relief component 6 may be separated from the first wall portion 13, and the pressure relief component 6 is mounted on the first wall portion 13. If the pressure relief component 6 is integrally formed with the first wall portion 13, the pressure relief component 6 is at least a portion of the first wall portion 13, that is, the entire first wall portion 13 may serve as the pressure relief component 6, or a portion of the first wall portion 13 may serve as the pressure relief component 6.

The first groove 61 is a pressure relief groove provided on the pressure relief component 6. When the internal pressure of the battery cell 10 reaches the burst pressure of the pressure relief component 6, the pressure relief component 6 can crack along at least a portion of the first groove 61 to open the predetermined pressure relief region 63. It can be understood that when the battery cell 10 undergoes pressure relief, the pressure relief component 6 may crack along the entire first groove 61 or crack along a portion of the first groove 61 to release the internal pressure of the battery cell 10. The first groove 61 may be formed in various ways, such as stamping forming and milling forming. The first groove 61 may include at least one groove segment 611. A cross-sectional shape of the groove segment 611 may be in various shapes such as a rectangular shape and a trapezoidal shape. The cross-section of the groove segment 611 is perpendicular to an extending direction of the groove segment 611. The first groove 61 may be in various shapes. For example, the first groove 61 is a groove extending along an arc trajectory. For another example, the first groove 61 includes a plurality of groove segments 611. The plurality of groove segments 611 may form a U shape, an H shape, a V shape, a Y shape, an X shape, a T shape, and the like.

The predetermined pressure relief region 63 is a region defined by the first groove 61 on the pressure relief component 6. There may be one or a plurality of predetermined pressure relief regions 63 defined by the first groove 61. The predetermined pressure relief region 63 can be opened when the pressure relief component 6 cracks along the first groove 61. The predetermined pressure relief region 63 may be triangular, rectangular, trapezoidal, semi-circular, or the like. In the embodiment shown in FIG. 5, there are two predetermined pressure relief regions 63, and the two shaded portions are the two predetermined pressure relief regions 63.

The plurality of second grooves 621 in the groove group 62 are spaced apart, that is, two adjacent second grooves 621 are separated by a certain distance. As an example, the plurality of second grooves 621 in the groove group 62 are arranged in parallel. The second grooves 621 in the groove group 62 may be two, three, four, or more. The groove group 62 is in one-to-one correspondence with the predetermined pressure relief region 63. In an example where there are two second grooves 621 in the groove group 62, each predetermined pressure relief region 63 corresponds to two second grooves 621. The second groove 621 is a flipping groove provided on the pressure relief component 6. When the pressure relief component 6 cracks along at least a portion of the first groove 61, the second groove 621 can guide at least a portion of the predetermined pressure relief region 63 to flip, that is, the second groove 621 serves to assist the flipping of the predetermined pressure relief region 63, making it easier for the predetermined pressure relief region 63 to flip to the exterior of the battery cell 10, thereby quickly opening the predetermined pressure relief region 63. The second groove 621 may guide the entire predetermined pressure relief region 63 to flip, or the second groove 621 may guide only a portion of the predetermined pressure relief region 63 to flip. The flipped portion of the predetermined pressure relief region 63 may flip around a residual portion of the second groove 621. The residual portion of the second groove 621 may be a groove bottom wall of the second groove 621. During the pressure relief process of the battery cell 10, the pressure relief component 6 can crack along at least a portion of the first groove 61 and generally does not crack along the second groove 621. A minimum residual thickness of the first groove 61 may be smaller than a minimum residual thickness of the second groove 621, so that a region of the pressure relief component 6 where the first groove 61 is provided is more likely to crack than a region where the second groove 621 is provided. The second groove 621 may be formed in various ways, such as stamping forming and milling forming. The second groove 621 may be in various shapes. For example, the second groove 621 is a groove extending along an arc trajectory. For another example, the second groove 621 is a groove extending along a straight trajectory. A cross-section of the second groove 621 may be in various shapes such as a rectangular shape and a trapezoidal shape.

In the groove group 62, projections of all second grooves 621 along a thickness direction X of the first wall portion may be located within the predetermined pressure relief region 63; or projections of all second grooves 621 along the thickness direction X of the first wall portion may be located outside the predetermined pressure relief region 63. Alternatively, projections of some second grooves 621 along the thickness direction X of the first wall portion may be located within the predetermined pressure relief region 63 while projections of other second grooves 621 along the thickness direction X of the first wall portion are located outside the predetermined pressure relief region 63.

The second groove 621 and the first groove 61 may be provided on a same surface of the pressure relief component 6 along the thickness direction X of the first wall portion; or the second groove 621 and the first groove 61 may be respectively provided on two opposite surfaces of the pressure relief component 6 along the thickness direction X of the first wall portion. The plurality of second grooves 621 in the groove group 62 may be provided on a same surface of the pressure relief component 6 along the thickness direction X of the first wall portion; or some of the plurality of second grooves 621 in the groove group 62 may be provided on one surface of the pressure relief component 6 along the thickness direction X of the first wall portion while the other second grooves 621 are provided on the other surface of the pressure relief component 6 along the thickness direction X of the first wall portion.

As an example, in the embodiments shown in FIGs. 4 to 7, a wall portion of the housing body 11 opposite the end cover 12 is the first wall portion 13. The first wall portion 13 serves as the pressure relief component 6. The first groove 61 and the second groove 621 are respectively provided on two opposite surfaces of the first wall portion 13 in the thickness direction. The first wall portion 13 is a rectangular wall portion. A length direction Y of the first wall portion, a width direction Z of the first wall portion, and the thickness direction X of the first wall portion are perpendicular to each other. The first groove 61 is H-shaped. The second groove 621 extends along a straight trajectory. An extending direction of the second groove 621 is parallel to the length direction Y of the first wall portion. A width direction of the second groove 621 is parallel to the width direction Z of the first wall portion. The housing body 11 may further include a second wall portion 14 and a third wall portion 15. The first wall portion 13 is connected to the second wall portion 14 and the third wall portion 15. Along the width direction of the second groove 621, the second wall portion 14 and the third wall portion 15 are oppositely disposed. The housing 1 is in a cuboid shape. The thickness direction X of the first wall portion is parallel to a height direction of the battery cell 10, the length direction Y of the first wall portion is parallel to a length direction of the battery cell 10, and the width direction Z of the first wall portion is parallel to a thickness direction of the battery cell 10.

In these embodiments, the pressure relief component 6 includes the first groove 61, so that the pressure relief component 6 can crack along the at least a portion of the first groove 61 when the battery cell 10 undergoes pressure relief, thereby releasing the internal pressure of the battery cell 10. The pressure relief component 6 further includes the groove group 62. The groove group 62 is in one-to-one correspondence with the predetermined pressure relief region 63. Each groove group 62 includes the plurality of second grooves 621. The plurality of second grooves 621 are spaced apart along the width direction of the second grooves 621. The plurality of second grooves 621 in the groove group 62 can all help the predetermined pressure relief region 63 to flip, making the flipping of the predetermined pressure relief region 63 easier, reducing the flipping difficulty of the predetermined pressure relief region 63, enabling the predetermined pressure relief region 63 to be opened more quickly when the pressure relief component 6 cracks along the first groove 61, and reducing the risk of fire or explosion when the battery cell 10 undergoes thermal runaway, thereby effectively improving the reliability of the battery cell 10.

In some embodiments, referring to FIGs. 5 to 7, the predetermined pressure relief region 63 has an opening end 631 and a non-opening end 632. The opening end 631 and the non-opening end 632 are oppositely disposed along the width direction of the second groove 621. Minimum residual thicknesses of the plurality of second grooves 621 in the groove group 62 gradually decrease along a direction from the non-opening end 632 toward the opening end 631.

Along the width direction of the second groove 621, the opening end 631 is an end of the predetermined pressure relief region 63 that can be opened when the battery cell 10 undergoes pressure relief, and the non-opening end 632 is an end of the predetermined pressure relief region 63 that is not opened when the battery cell 10 undergoes pressure relief.

The minimum residual thickness of the second groove 621 is a minimum thickness of a residual portion of the pressure relief component 6 after the second groove 621 is provided. The residual portion of the second groove 621 may be the groove bottom wall of the second groove 621. The thickness of the residual portion of the second groove 621 may be uniform or non-uniform. If the thickness of the residual portion of the second groove 621 is non-uniform, a thickness at the thinnest position of the residual portion of the second groove 621 is the minimum residual thickness of the second groove 621.

In an example where there are two second grooves 621 in the groove group 62, among the two second grooves 621, a minimum residual thickness of one second groove 621 away from the opening end 631 is greater than a minimum residual thickness of one second groove 621 close to the opening end 631.

Among the plurality of second grooves 621, each second groove 621 can help a portion of the predetermined pressure relief region 63 located between the second groove 621 and the opening end 631 to flip, so that the portion of the predetermined pressure relief region 63 located between the second groove 621 and the opening end 631 can flip around the residual portion of the second groove 621. The minimum residual thicknesses of the plurality of second grooves 621 gradually decreasing along the direction from the non-opening end 632 toward the opening end 631 helps to enable a portion of the predetermined pressure relief region 63 located between the second groove 621 close to the opening end 631 and the opening end 631 flips earlier than a portion of the predetermined pressure relief region 63 located between the second groove 621 away from the opening end 631 and the opening end 631.

In some embodiments, maximum groove depths of the plurality of second grooves 621 in the groove group 62 gradually increase along the direction from the non-opening end 632 toward the opening end 631.

A maximum distance along the thickness direction X of the first wall portion between a groove opening of the second groove 621 and the groove bottom surface of the second groove 621 is the maximum groove depth of the second groove 621. As an example, the sum of the maximum groove depth of the second groove 621 and the minimum residual thickness of the second groove 621 is equal to the thickness of the first wall portion 13.

In an example where there are two second grooves 621 in the groove group 62, among the two second grooves 621, a maximum groove depth of one second groove 621 away from the opening end 631 is smaller than a maximum groove depth of one second groove 621 close to the opening end 631.

During production, the plurality of second grooves 621 in the groove group 62 may be machined in an order of gradually increasing depth along the direction from the non-opening end 632 toward the opening end 631, thereby enabling the minimum residual thicknesses of the plurality of second grooves 621 in the groove group 62 to gradually decrease along the direction from the non-opening end 632 toward the opening end 631.

In some embodiments, the minimum residual thickness of the first groove 61 is smaller than the minimum residual thickness of the second groove 621.

The minimum residual thickness of the first groove 61 is a minimum thickness of a residual portion of the pressure relief component 6 after the first groove 61 is provided. The residual portion of the first groove 61 may be a groove bottom wall of the first groove 61. The thickness of the residual portion of the first groove 61 may be uniform or non-uniform. If the thickness of the residual portion of the first groove 61 is non-uniform, a thickness at the thinnest position of the residual portion of the first groove 61 is the minimum residual thickness of the first groove 61.

It can be understood that the minimum residual thickness of the first groove 61 is smaller than the minimum residual thickness of each of all second grooves 621 in the groove group 62.

In the groove group 62, the minimum residual thicknesses of the plurality of second grooves 621 may be equal or unequal. In the embodiments where the minimum residual thicknesses of the plurality of second grooves 621 in the groove group 62 gradually decrease along the direction from the non-opening end 632 toward the opening end 631, the minimum residual thickness of the first groove 61 is smaller than a minimum residual thickness of one second groove 621 closest to the opening end 631 in the groove group 62. As shown in FIG. 7, the minimum residual thickness of the first groove 61 is D₁, the minimum residual thickness of the second groove 621 closest to the opening end 631 in the groove group 62 (the second groove 621 with the smallest minimum residual thickness in the groove group 62) is D₂, and D₁ < D₂.

In these embodiments, the minimum residual thickness of the first groove 61 is smaller than the minimum residual thickness of the second groove 621, so that the strength of the residual portion of the first groove 61 is smaller than the strength of the residual portion of the second groove 621, helping the pressure relief component 6 to preferentially crack along the first groove 61 to achieve quick opening of the predetermined pressure relief region 63.

In some embodiments, the minimum residual thickness of the first groove 61 is D₁, and 0.1 mm ≤ D₁ ≤ 0.5 mm.

D₁ may be any point value of 0.1 mm, 0.12 mm, 0.15 mm, 0.18 mm, 0.2 mm, 0.22 mm, 0.25 mm, 0.28 mm, 0.3 mm, 0.32 mm, 0.35 mm, 0.38 mm, 0.4 mm, 0.42 mm, 0.45 mm, 0.48 mm, 0.5 mm, or a value within a range defined by any two of these values.

D₁ ≥ 0.1 mm enables the residual portion of the first groove 61 to have sufficient strength, reducing the risk of the pressure relief component 6 prematurely cracking along the first groove 61 during long-term cycling of the battery cell 10 and prolonging the service life of the battery cell 10. D₁ ≤ 0.5 mm enables the pressure relief component 6 to crack along the first groove 61 more timely when the battery cell 10 undergoes thermal runaway, reducing the risk of fire or explosion of the battery cell 10.

In some embodiments, a maximum groove depth of the first groove 61 is greater than the maximum groove depth of the second groove 621.

A maximum distance along the thickness direction X of the first wall portion between a groove opening of the first groove 61 and a groove bottom surface of the first groove 61 is the maximum groove depth of the first groove 61. As an example, the sum of the maximum groove depth of the first groove 61 and the minimum residual thickness of the first groove 61 is equal to the thickness of the first wall portion 13.

It can be understood that the maximum groove depth of the first groove 61 is greater than the maximum groove depth of each of all second grooves 621 in the groove group 62.

In the groove group 62, the maximum groove depths of the plurality of second grooves 621 may be equal or unequal. In the embodiments where the maximum groove depths of the plurality of second grooves 621 in the groove group 62 gradually increase along the direction from the non-opening end 632 toward the opening end 631, the maximum groove depth of the first groove 61 is greater than a maximum groove depth of one second groove 621 closest to the opening end 631 in the groove group 62. As shown in FIG. 7, the maximum groove depth of the first groove 61 is H₁, the maximum groove depth of the second groove 621 closest to the opening end 631 in the groove group 62 (the second groove 621 with the largest maximum groove depth in the groove group 62) is H₂, and H₂ < H₁. As an example, the thickness of the first wall portion 13 is D, and D = H₁ + D₁ = H₂ + D₂.

During production, the depth of the first groove 61 may be machined deeper than the depth of the second groove 621, reducing the difficulty of enabling the minimum residual thickness of the first groove 61 to be smaller than the minimum residual thickness of the second groove 621.

In some embodiments, still referring to FIG. 5, the first groove 61 has two end portions. A line connecting the two end portions is a first connecting line W. The first groove 61 and the first connecting line W are connected to each other and jointly enclose the predetermined pressure relief region 63. The predetermined pressure relief region 63 has an opening end 631 and a non-opening end 632. The first connecting line W is located at the non-opening end 632. The opening end 631 and the non-opening end 632 are oppositely disposed along the width direction of the second groove 621. A projection of at least one second groove 621 in the groove group 62 along the thickness direction X of the first wall portion is located in the predetermined pressure relief region 63 and located between the opening end 631 and the non-opening end 632 along the width direction of the second groove 621. The width direction of the second groove 621 is perpendicular to the thickness direction X of the first wall portion.

The first connecting line W is a line connecting the two end portions of the first groove 61. The first connecting line W is a straight line. One first groove 61 and one first connecting line W may be connected to each other and jointly enclose one predetermined pressure relief region 63. Alternatively, one first groove 61 and a plurality of second connecting lines may be connected to each other and jointly enclose a plurality of predetermined pressure relief regions 63. As an example, in the embodiments shown in FIG. 5, the first groove 61 is an H-shaped groove. Along the width direction of the second groove 621, both sides of the first groove 61 have two end portions. The first groove 61 and two first connecting lines W are connected to each other and jointly enclose two predetermined pressure relief regions 63.

The first groove 61 may include only one groove segment 611 or may include a plurality of groove segments 611. If the first groove 61 includes only one groove segment 611, the groove segment 611 and the first connecting line W may be connected end to end in sequence and jointly enclose the predetermined pressure relief region 63. If the first groove 61 includes a plurality of groove segments 611, the plurality of groove segments 611 and the first connecting line W may be connected end to end in sequence and jointly enclose the predetermined pressure relief region 63.

In the groove group 62, projections of some second grooves 621 along the thickness direction X of the first wall portion may be located within the predetermined pressure relief region 63 while projections of other second grooves 621 along the thickness direction X of the first wall portion are located outside the predetermined pressure relief region 63. Alternatively, the projections of all second grooves 621 along the thickness direction X of the first wall portion may be located within the predetermined pressure relief region 63.

In these embodiments, a projection of at least one second groove 621 in the groove group 62 along the thickness direction X of the first wall portion is located in the predetermined pressure relief region 63 and located between the opening end 631 and the non-opening end 632 along the width direction of the second groove 621, so that at least two zones of the predetermined pressure relief region 63 flip, thereby reducing an area swept by the predetermined pressure relief region 63 during flipping, reducing a flipping space required for the predetermined pressure relief region 63, reducing the risk of interference between the predetermined pressure relief region 63 and external components, and improving the reliability of the battery cell 10. The external component may be a wall portion of the box 20 in the battery 100 opposite the first wall portion 13, or may be a thermal management component in the battery 100 opposite the first wall portion 13. The thermal management component may be a water-cooling plate, a heating element, or the like.

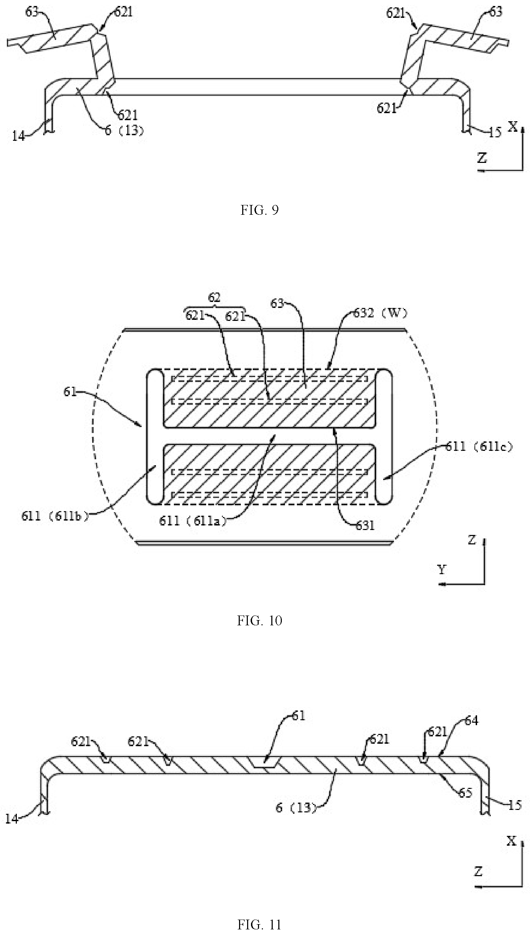

Referring to FIGs. 8 and 9, FIG. 8 is a cross-sectional view of the housing 1 shown in FIG. 6 (with a portion of the predetermined pressure relief region 63 opened); and FIG. 9 is a cross-sectional view of the housing 1 shown in FIG. 6 (with the entire predetermined pressure relief region 63 opened). In an example where there are two second grooves 621 in the groove group 62, when the battery cell 10 undergoes pressure relief, a portion of the predetermined pressure relief region 63 first flips around the residual portion of the second groove 621 close to the opening end 631; then the predetermined pressure relief region 63 flips around the residual portion of the second groove 621 away from the opening end 631, thereby effectively reducing the area swept by the predetermined pressure relief region 63 during flipping and reducing the flipping space required for the predetermined pressure relief region 63.

In some embodiments, still referring to FIG. 5, a projection of at least one second groove 621 in the groove group 62 along the thickness direction X of the first wall portion does not overlap with a projection of the predetermined pressure relief region 63 along the thickness direction X of the first wall portion.

In the groove group 62, a projection of one second groove 621 along the thickness direction X of the first wall portion may not overlap with the projection of the predetermined pressure relief region 63 along the thickness direction X of the first wall portion, that is, the projection of one second groove 621 in the groove group 62 along the thickness direction X of the first wall portion is located outside the predetermined pressure relief region 63. Alternatively, projections of a plurality of second grooves 621 along the thickness direction X of the first wall portion may not overlap with the projection of the predetermined pressure relief region 63 along the thickness direction X of the first wall portion, that is, the projections of the plurality of second grooves 621 in the groove group 62 along the thickness direction X of the first wall portion are located outside the predetermined pressure relief region 63.

As an example, in the embodiments shown in FIG. 5, there are two second grooves 621 in the groove group 62. A projection of one of the two second grooves 621 along the thickness direction X of the first wall portion is located within the predetermined pressure relief region 63, and a projection of the other second groove 621 along the thickness direction X of the first wall portion is located outside the predetermined pressure relief region 63.

In these embodiments, the projection of at least one second groove 621 in the groove group 62 along the thickness direction X of the first wall portion does not overlap with the projection of the predetermined pressure relief region 63 along the thickness direction X of the first wall portion, so that at least one second groove 621 is located outside the predetermined pressure relief region 63, and a larger zone of the predetermined pressure relief region 63 can flip when the battery cell 10 undergoes thermal runaway, so as to increase an opening area of the predetermined pressure relief region 63. In addition, the second groove 621 located outside the predetermined pressure relief region 63 can absorb excess material extruded when the first groove 61 is formed to a certain extent, improving the flatness of an outer surface of the housing 1 in the width direction of the second groove 621 (an outer surface of the second wall portion 14 and an outer surface of the third wall portion 15). The second groove 621 located outside the predetermined pressure relief region 63 can also block deformation energy of the housing 1 to a certain extent when the housing 1 is subjected to internal and external impact forces, reducing the risk of premature opening of the predetermined pressure relief region 63 due to the swelling of the battery cell 10.

In some embodiments, at least one second groove 621 in the groove group 62 is a first guide groove 621a. A projection of the first guide groove 621a along the thickness direction X of the first wall portion does not overlap with the projection of the predetermined pressure relief region 63 along the thickness direction X of the first wall portion. The first guide groove 621a and the first groove 61 are spaced apart along a width direction of the first guide groove 621a. Two ends of the projection of the first guide groove 621a along the thickness direction X of the first wall portion along an extending direction respectively extend beyond the two end portions of the first groove 61.

The first guide groove 621a is the second groove 621 in the groove group 62 whose projection along the thickness direction X of the first wall portion does not overlap with the projection of the predetermined pressure relief region 63. The width direction of the first guide groove 621a is the width direction of the second groove 621. The first guide groove 621a and the first groove 61 are spaced apart along the width direction of the first guide groove 621a, that is, the projection of the first guide groove 621a along the thickness direction X of the first wall portion and the projection of the first groove 61 along the thickness direction X of the first wall portion are separated by a certain distance in the width direction of the first guide groove 621a. In these embodiments, the first guide groove 621a and the first groove 61 may be located on a same side of the pressure relief component 6 along the thickness direction X of the first wall portion, or may be located on two opposite sides of the pressure relief component 6 along the thickness direction X of the first wall portion.

As an example, a length of the first guide groove 621a is greater than a length of the line connecting the two end portions of the first groove 61 (the first connecting line W).

In these embodiments, the first guide groove 621a and the first groove 61 are spaced apart along the width direction of the first guide groove 621a, and two ends of the first guide groove 621a respectively extend beyond the two end portions of the first groove 61, making the first guide groove 621a longer and enhancing the auxiliary flipping effect of the first guide groove 621a on the predetermined pressure relief region 63. In addition, this structure can also improve the separation effect of the first guide groove 621a on a surface of the housing 1 in the width direction of the first guide groove 621a from the first groove 61, improve the absorption effect of the first guide groove 621a on excess material extruded when the first groove 61 is formed, further improve the flatness of the outer surface of the housing 1 in the width direction of the first guide groove 621a, and improve the blocking effect of the first guide groove 621a on deformation energy of the housing 1 when the housing 1 is subjected to internal and external impact forces, further reducing the risk of premature opening of the predetermined pressure relief region 63 due to the swelling of the battery cell 10.

In some embodiments, referring to FIG. 10, FIG. 10 is a partial view of a housing 1 according to some embodiments of the present application. Projections of all second grooves 621 in the groove group 62 along the thickness direction X of the first wall portion are located in the predetermined pressure relief region 63 and located between the opening end 631 and the non-opening end 632 along the width direction of the second grooves 621.

It can be understood that if there are two second grooves 621 in the groove group 62, projections of the two second grooves 621 along the thickness direction X of the first wall portion are located in the predetermined pressure relief region 63. If there are three second grooves 621 in the groove group 62, projections of the three second grooves 621 along the thickness direction X of the first wall portion are located in the predetermined pressure relief region 63. If there are four second grooves 621 in the groove group 62, projections of the four second grooves 621 along the thickness direction X of the first wall portion are located in the predetermined pressure relief region 63. If there are five second grooves 621 in the groove group 62, projections of the five second grooves 621 along the thickness direction X of the first wall portion are located in the predetermined pressure relief region 63.

In these embodiments, the projections of all second grooves 621 in the groove group 62 along the thickness direction X of the first wall portion are located in the predetermined pressure relief region 63 and located between the opening end 631 and the non-opening end 632 along the width direction of the second grooves 621, so that more zones of the predetermined pressure relief region 63 flip, further reducing the area swept by the predetermined pressure relief region 63 during flipping and reducing the flipping space required for the predetermined pressure relief region 63.

In some embodiments, still referring to FIGs. 5 and 10, along the thickness direction X of the first wall portion, the projection of the second groove 621 does not overlap with the projection of the first groove 61.

It can be understood that the projection of the second groove 621 along the thickness direction X of the first wall portion and the projection of the first groove 61 along the thickness direction X of the first wall portion have no overlapping region.

In these embodiments, the projection of the second groove 621 along the thickness direction X of the first wall portion does not overlap with the projection of the first groove 61 in the thickness direction X of the first wall portion, so that the projection of the second groove 621 along the thickness direction X of the first wall portion is not connected to the projection of the first groove 61 along the thickness direction X of the first wall portion, reducing mutual influence between the first groove 61 and the second groove 621 during machining, and reducing the risk of the first groove 61 and the second groove 621 being in communication with each other during machining.

In some embodiments, the first groove 61 defines a plurality of predetermined pressure relief regions 63.

The first groove 61 may define two, three, four, or more predetermined pressure relief regions 63. As an example, in the embodiments shown in FIGs. 5 and 10, the first groove 61 defines two predetermined pressure relief regions 63.

When the battery cell 10 undergoes thermal runaway, the plurality of predetermined pressure relief regions 63 can all be opened. Under the condition that a total pressure relief area of the pressure relief component 6 is specified, an opening velocity of the predetermined pressure relief regions 63 can be increased, and pressure relief can be achieved more quickly.

In some embodiments, still referring to FIGs. 5 and 10, the first wall portion 13 is a rectangular wall portion. The plurality of second grooves 621 in the groove group 62 are spaced apart along the width direction Z of the first wall portion.

As an example, the width direction of the second groove 621 is parallel to the width direction Z of the first wall portion.

The housing 1 may be in a cuboid shape. The first wall portion 13 may be any wall portion of the housing 1 that is rectangular in shape. The first wall portion 13 is a rectangular wall portion, that is, when viewed along the thickness direction X of the first wall portion, the first wall portion 13 is substantially rectangular in shape. A length of the first wall portion 13 is greater than a width of the first wall portion 13.

When the first wall portion 13 deforms due to the swelling of the battery cell 10, the deformation amount of the first wall portion 13 in the width direction is smaller than that in the length direction Y of the first wall portion. The plurality of second grooves 621 in the groove group 62 being spaced along the width direction Z of the first wall portion can reduce the influence of deformation of the first wall portion 13 on the second groove 621 and reduce the risk of fatigue cracking of the pressure relief component 6 along the second groove 621 during the normal cycle life of the battery cell 10.

In some embodiments, still referring to FIG. 6, along the thickness direction X of the first wall portion, the pressure relief component 6 has a first surface 64 and a second surface 65 opposite each other. The first groove 61 is recessed from the first surface 64 in a direction approaching the second surface 65, and the second groove 621 is recessed from the second surface 65 in a direction approaching the first surface 64.

The first surface 64 and the second surface 65 are two opposite surfaces of the pressure relief component 6 along the thickness direction X of the first wall portion. The first groove 61 is recessed from the first surface 64 in a direction approaching the second surface 65, that is, the first groove 61 is provided on the first surface 64. The second groove 621 is recessed from the second surface 65 in a direction approaching the first surface 64, that is, the second groove 621 is provided on the second surface 65. One of the first surface 64 and the second surface 65 may be an outer surface of the pressure relief component 6, and the other is an inner surface of the pressure relief component 6. The outer surface of the pressure relief component 6 faces the exterior of the battery cell 10, and the inner surface of the pressure relief component 6 faces the interior of the battery cell 10. The first surface 64 and the second surface 65 may be planar. The first surface 64 and the second surface 65 may be arranged in parallel or at a non-zero included angle.

As an example, in the embodiments shown in FIG. 6, the first surface 64 is parallel to the second surface 65. A minimum distance along the thickness direction X of the first wall portion between the groove bottom surface of the first groove 61 and the second surface 65 is equal to the minimum residual thickness of the first groove 61. A minimum distance along the thickness direction X of the first wall portion between the groove bottom surface of the second groove 621 and the first surface 64 is equal to the minimum residual thickness of the second groove 621. The maximum groove depth of the first groove 61 is equal to a maximum distance along the thickness direction X of the first wall portion between the first surface 64 and the groove bottom surface of the first groove 61. The maximum groove depth of the second groove 621 is equal to a maximum distance along the thickness direction X of the first wall portion between the second surface 65 and the groove bottom surface of the second groove 621.

In these embodiments, the first groove 61 and the second groove 621 are respectively located on two sides of the pressure relief component 6 along the thickness direction X of the first wall portion, facilitating machining of the first groove 61 and the second groove 621 on the two sides of the pressure relief component 6 respectively, and helping to reduce mutual influence between the first groove 61 and the second groove 621 during machining.

In some embodiments, referring to FIG. 11, FIG. 11 is a cross-sectional view of a housing 1 according to some embodiments of the present application. Along the thickness direction X of the first wall portion, the pressure relief component 6 has a first surface 64 and a second surface 65 opposite each other. Both the first groove 61 and the second groove 621 are recessed from the first surface 64 in a direction approaching the second surface 65.

Both the first groove 61 and the second groove 621 are recessed from the first surface 64 in the direction approaching the second surface 65, that is, both the first groove 61 and the second groove 621 are provided on the first surface 64. One of the first surface 64 and the second surface 65 is an inner surface of the pressure relief component 6, and the other is an outer surface of the pressure relief component 6.

In these embodiments, both the first groove 61 and the second groove 621 are recessed from the first surface 64 in the direction approaching the second surface 65, and the first groove 61 and the second groove 621 are provided on a same side of the pressure relief component 6 in the thickness direction, making it easier to machine the first groove 61 and the second groove 621 on the pressure relief component 6. The first groove 61 and the second groove 621 can be machined without flipping the pressure relief component 6, helping to optimize the production rhythm of the battery cell 10.

In some embodiments, still referring to FIGs. 6 and 11, the first surface 64 is a surface of the pressure relief component 6 facing the exterior of the battery cell 10. The second surface 65 is a surface of the pressure relief component 6 facing the interior of the battery cell 10.

The first surface 64 is the outer surface of the pressure relief component 6. The second surface 65 is the inner surface of the pressure relief component 6.

Referring to FIGs. 6 and 11, when the first groove 61 is provided on the first surface 64, the first groove 61 is provided on an outer side of the pressure relief component 6, facilitating machining and forming of the first groove 61 on the exterior of the housing 1, and helping to reduce the forming difficulty of the first groove 61, thereby improving the production efficiency of the battery cell 10. Referring to FIG. 11, when the second groove 621 is provided on the first surface 64, the second groove 621 is provided on the outer side of the pressure relief component 6, facilitating machining and forming of the second groove 621 on the exterior of the housing 1, and helping to reduce the forming difficulty of the second groove 621. Referring to FIGs. 6 and 11, when the second groove 621 is provided on the second surface 65, the second groove 621 is provided on the inner side of the pressure relief component 6. Thus, on the one hand, two groove side surfaces in the width direction of the second groove 621 are less likely to abut against each other during the process of the predetermined pressure relief region 63 flipping outward to be opened, helping to increase the opening area of the predetermined pressure relief region 63; on the other hand, the second groove 621 is not exposed to the exterior of the battery cell 10, reducing the risk of oxidation and corrosion of the pressure relief component 6 in a region where the second groove 621 is located.

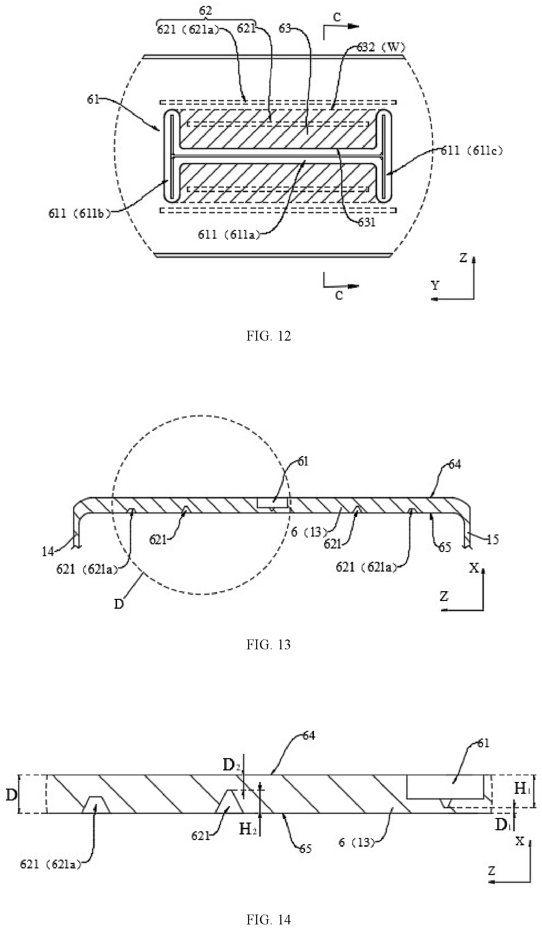

In some embodiments, referring to FIGs. 12 to 14, FIG. 12 is a partial view of a housing 1 according to some other embodiments of the present application; FIG. 13 is a cross-sectional view along C-C of the housing 1 shown in FIG. 12; and FIG. 14 is a partially enlarged view at D in FIG. 13. The first groove 61 includes a plurality of levels of grooves sequentially disposed along a direction from the first surface 64 toward the second surface 65. Along the thickness direction X of the first wall portion, in two adjacent levels of grooves, a level of groove away from the first surface 64 is provided on a groove bottom surface of a level of groove close to the first surface 64.

The first groove 61 is a stepped groove. The first groove 61 may be a two-level groove, a three-level groove, a four-level groove, a five-level groove, or the like. Along the direction from the first surface 64 toward the second surface 65, groove widths of the levels of grooves gradually decrease. It can be understood that, among the plurality of levels of grooves of the first groove 61, a level of groove with the largest groove width is provided on the first surface 64. Taking the first groove 61 being a two-level groove as an example, two levels of grooves are respectively a first-level groove and a second-level groove. During machining, a first-level groove with a larger width may be first machined on the first surface 64, and then a second-level groove with a smaller width may be machined on the groove bottom surface of the first-level groove.

In the embodiments where the first groove 61 includes a plurality of groove segments 611, it can be understood that each groove segment 611 is a multi-level groove, that is, each groove segment 611 is a stepped groove. Among the plurality of levels of grooves of the first groove 61, a groove bottom surface of a level of groove farthest from the first surface 64 is the groove bottom surface of the first groove 61, and a minimum residual thickness of the level of groove farthest from the first surface 64 is the minimum residual thickness of the first groove 61. As an example, the first surface 64 is parallel to the second surface 65. A minimum distance between the groove bottom surface of the level of groove farthest from the first surface 64 and the second surface 65 is equal to the minimum residual thickness of the first groove 61. A maximum distance between the groove bottom surface of the level of groove farthest from the first surface 64 and the first surface 64 is equal to the maximum groove depth of the first groove 61.

The first groove 61 is configured as a plurality of levels of grooves arranged along the thickness direction X of the first wall portion, so that when the first groove 61 is formed, the levels of grooves can be machined one by one along the direction from the first surface 64 toward the second surface 65, reducing the forming depth of each level of groove, reducing the forming force applied to the pressure relief component 6 when the first groove 61 is formed, and reducing the risk of damage to the pressure relief component 6 when the first groove 61 is formed.

In some embodiments, still referring to FIGs. 12 to 14, the first groove 61 includes a plurality of groove segments 611. The plurality of groove segments 611 are connected to each other. The plurality of groove segments 611 jointly define at least one predetermined pressure relief region 63.

The groove segment 611 may extend along a straight trajectory or along a non-straight trajectory. The non-straight trajectory may be an arc trajectory, a parabolic trajectory, or the like. The plurality of groove segments 611 may jointly define one predetermined pressure relief region 63. For example, the plurality of groove segments 611 form a V-shaped groove, a U-shaped groove, or the like. The plurality of groove segments 611 may jointly define a plurality of predetermined pressure relief regions 63. For example, the plurality of groove segments 611 form an H-shaped groove, an X-shaped groove, a Y-shaped groove, or the like, where the H-shaped groove defines two predetermined pressure relief regions 63, the X-shaped groove defines four predetermined pressure relief regions 63, and the Y-shaped groove defines three predetermined pressure relief regions 63.

In the first groove 61, minimum residual thicknesses of the plurality of groove segments 611 may be equal, or minimum residual thicknesses of at least two groove segments 611 may be unequal. If the minimum residual thicknesses of at least two groove segments 611 are unequal, a minimum residual thickness of a groove segment 611 with the smallest minimum residual thickness among the plurality of groove segments 611 is the minimum residual thickness of the first groove 61.

In these embodiments, a predetermined pressure relief region 63 with a larger area can be defined by the plurality of groove segments 611, helping to increase a pressure relief area of the battery cell 10.

In some embodiments, still referring to FIGs. 12 to 14, the plurality of groove segments 611 include a first groove segment 611a, a second groove segment 611b, and a third groove segment 611c. The second groove segment 611b and the third groove segment 611c are oppositely disposed. A plurality of second grooves 621 in the groove group 62 are located on a same side of the first groove segment 611a in a width direction. The first groove segment 611a is connected to the second groove segment 611b and the third groove segment 611c. The first groove segment 611a, the second groove segment 611b, and the third groove segment 611c jointly define at least one predetermined pressure relief region 63.

The first groove segment 611a, the second groove segment 611b, and the third groove segment 611c are three groove segments 611 in the first groove 61. The first groove segment 611a, the second groove segment 611b, and the third groove segment 611c may be straight grooves extending along a straight trajectory or non-straight grooves extending along a non-straight trajectory. If the first groove segment 611a, the second groove segment 611b, and the third groove segment 611c all extend along a straight trajectory, the first groove segment 611a and the second groove segment 611b may be arranged at an acute angle, a right angle, or an obtuse angle; the first groove segment 611a and the third groove segment 611c may be arranged at an acute angle, a right angle, or an obtuse angle; and the second groove segment 611b and the third groove segment 611c may be arranged in parallel. Alternatively, an extension line of the second groove segment 611b may intersect with an extension line of the third groove segment 611c. The first groove segment 611a and the second groove 621 may be arranged in parallel.

The first groove segment 611a being connected to the second groove segment 611b and the third groove segment 611c may mean that two ends of the first groove segment 611a may be respectively connected to the second groove segment 611b and the third groove segment 611c, or at least one of the second groove segment 611b and the third groove segment 611c may be connected to a position deviated from an end portion of the first groove segment 611a, so that at least one of the second groove segment 611b and the third groove segment 611c is located between the two ends of the first groove segment 611a. A connection position of the second groove segment 611b and the first groove segment 611a may be located at one end of the second groove segment 611b or located between two ends of the second groove segment 611b. A connection position of the third groove segment 611c and the first groove segment 611a may be located at one end of the third groove segment 611c or located between two ends of the third groove segment 611c. The first groove segment 611a, the second groove segment 611b, and the third groove segment 611c may jointly define one predetermined pressure relief region 63 or a plurality of predetermined pressure relief regions 63. The first groove segment 611a, the second groove segment 611b, and the third groove segment 611c may form a U-shaped groove, an H-shaped groove, or the like. If the first groove segment 611a, the second groove segment 611b, and the third groove segment 611c form a U-shaped groove, the first groove 61 of this structure defines one predetermined pressure relief region 63. If the first groove segment 611a, the second groove segment 611b, and the third groove segment 611c form an H-shaped groove, the first groove 61 of this structure defines two predetermined pressure relief regions 63.

It should be noted that, in the embodiments where the first groove 61 is a multi-level groove structure, the first groove segment 611a, the second groove segment 611b, and the second groove segment 611b are all multi-level groove structures.

In these embodiments, the first groove segment 611a, the second groove segment 611b, and the third groove segment 611c are connected to each other and jointly define at least one predetermined pressure relief region 63. The first groove 61 of this structure makes an intersection position of the first groove segment 611a and the second groove segment 611b and a connection position of the first groove segment 611a and the third groove segment 611c weaker and more likely to crack and open the predetermined pressure relief region 63 for pressure relief, and can further increase the opening area of the predetermined pressure relief region 63, thereby increasing the pressure relief area of the battery cell 10 and improving the pressure relief velocity of the battery cell 10.

In some embodiments, the connection position of the second groove segment 611b and the first groove segment 611a is deviated from the two ends of the second groove segment 611b, and the connection position of the third groove segment 611c and the first groove segment 611a is deviated from the two ends of the third groove segment 611c, so as to form predetermined pressure relief regions 63 on both sides of the first groove segment 611a.

The connection position of the second groove segment 611b and the first groove segment 611a is deviated from the two ends of the second groove segment 611b, that is, the connection position of the second groove segment 611b and the first groove segment 611a is not located at either end of the two ends of the second groove segment 611b; and along an extending direction of the second groove segment 611b, the connection position of the second groove segment 611b and the first groove segment 611a is located between the two ends of the second groove segment 611b. The connection position of the second groove segment 611b and the first groove segment 611a may be located at a midpoint position of the second groove segment 611b or deviated from the midpoint position of the second groove segment 611b.

The connection position of the third groove segment 611c and the first groove segment 611a is deviated from the two ends of the third groove segment 611c, that is, the connection position of the third groove segment 611c and the first groove segment 611a is not located at either end of the two ends of the third groove segment 611c; and along an extending direction of the third groove segment 611c, the connection position of the third groove segment 611c and the first groove segment 611a is located between the two ends of the third groove segment 611c. The connection position of the third groove segment 611c and the first groove segment 611a may be located at a midpoint position of the third groove segment 611c or deviated from the midpoint position of the third groove segment 611c.

As an example, in the embodiments shown in FIGs. 12 to 14, the connection position of the second groove segment 611b and the first groove segment 611a is located at the midpoint position of the second groove segment 611b. The connection position of the third groove segment 611c and the first groove segment 611a is located at the midpoint position of the third groove segment 611c. The first groove segment 611a, the second groove segment 611b, and the third groove segment 611c form an H-shaped groove. There are two predetermined pressure relief regions 63. A portion of the second groove segment 611b, a portion of the third groove segment 611c, the first groove segment 611a, and a first connecting line W jointly enclose one predetermined pressure relief region 63. Another portion of the second groove segment 611b, another portion of the third groove segment 611c, the first groove segment 611a, and another first connecting line W jointly enclose the other predetermined pressure relief region 63. The first groove 61 is provided on the first surface 64. The second groove 621 is provided on the second surface 65.

In these embodiments, the connection position of the second groove segment 611b and the first groove segment 611a is deviated from the two ends of the second groove segment 611b, so that during the pressure relief process, after the pressure relief component 6 cracks at the connection position of the second groove segment 611b and the first groove segment 611a, the crack can diffuse along the second groove segment 611b toward the two ends of the second groove segment 611b, shortening the time for the pressure relief component 6 to crack along the second groove segment 611b. The connection position of the third groove segment 611c and the first groove segment 611a is deviated from the two ends of the third groove segment 611c, so that during the pressure relief process, after the pressure relief component 6 cracks at the connection position of the third groove segment 611c and the first groove segment 611a, the crack can diffuse along the third groove segment 611c toward the two ends of the third groove segment 611c, shortening the time for the pressure relief component 6 to crack along the third groove segment 611c. In such a structure, the first groove segment 611a of the first groove 61 is located between two predetermined pressure relief regions 63, and after the pressure relief component 6 cracks along the first groove segment 611a, the two predetermined pressure relief regions 63 can be opened in an opposite-opening manner for pressure relief when the battery cell 10 undergoes pressure relief, enabling the two predetermined pressure relief regions 63 to be opened quickly, and helping to improve the pressure relief velocity of the battery cell 10.

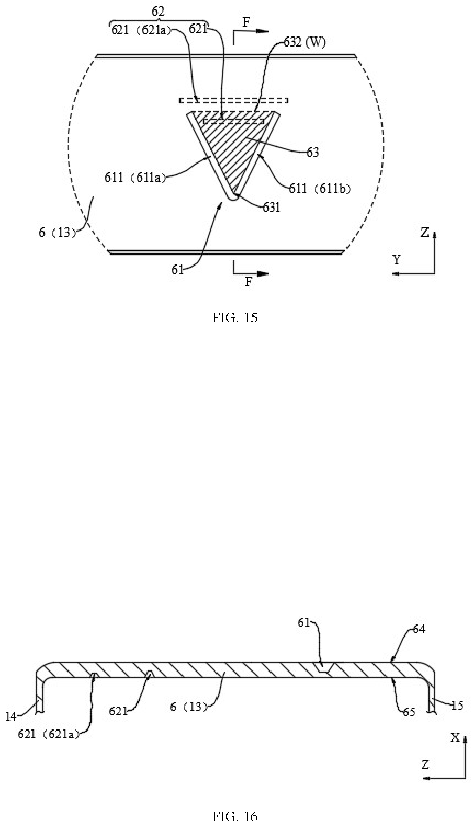

In some embodiments, referring to FIGs. 15 and 16, FIG. 15 is a partial view of a housing 1 according to still some other embodiments of the present application; and FIG. 16 is a cross-sectional view along F-F of the housing 1 shown in FIG. 15. The plurality of groove segments 611 include a first groove segment 611a and a second groove segment 611b. The first groove segment 611a is connected to the second groove segment 611b. The first groove segment 611a and the second groove segment 611b jointly define at least one predetermined pressure relief region 63.

The first groove segment 611a and the second groove segment 611b are two groove segments 611 in the first groove 61. The first groove segment 611a and the second groove segment 611b may be straight grooves extending along a straight trajectory or non-straight grooves extending along a non-straight trajectory. If both the first groove segment 611a and the second groove segment 611b extend along a straight trajectory, the first groove segment 611a and the second groove segment 611b may be arranged at an acute angle, a right angle, or an obtuse angle. The first groove segment 611a and the second groove segment 611b may be connected end to end to form a V-shaped groove, an L-shaped groove, or the like. The first groove 61 of this structure may enclose one predetermined pressure relief region 63 with one first connecting line W. The first groove segment 611a and the second groove segment 611b may alternatively be arranged in a cross manner to form an X-shaped groove. The first groove 61 of this structure and four first connecting lines W may jointly enclose four predetermined pressure relief regions 63.

As an example, in the embodiments shown in FIGs. 15 and 16, the first groove segment 611a is connected to the second groove segment 611b to form a V-shaped structure. The first groove 61 is provided on the first surface 64. The second groove 621 is provided on the second surface 65.

In the embodiments where the first groove 61 is a multi-level groove structure, both the first groove segment 611a and the second groove segment 611b are multi-level groove structures.

In these embodiments, the first groove segment 611a and the second groove segment 611b are connected to each other and jointly define at least one predetermined pressure relief region 63. The first groove 61 of this structure has a simple structure. The connection position of the first groove segment 611a and the second groove segment 611b has a greater stress concentration factor, is weaker, and is more likely to crack, so that after the pressure relief component 6 cracks from the connection position of the first groove segment 611a and the second groove segment 611b when the battery cell 10 undergoes thermal runaway, the pressure relief component 6 can quickly crack along the first groove segment 611a and the second groove segment 611b, enabling the predetermined pressure relief region 63 to be opened more quickly for timely pressure relief.

In some embodiments, the groove segment 611 extends along a straight trajectory.

It can be understood that, in the embodiments where the first groove 61 includes the first groove segment 611a and the second groove segment 611b, both the first groove segment 611a and the second groove segment 611b extend along a straight trajectory. In the embodiments where the first groove 61 includes the first groove segment 611a, the second groove segment 611b, and the third groove segment 611c, the first groove segment 611a, the second groove segment 611b, and the third groove segment 611c all extend along a straight trajectory.

In these embodiments, the groove segment 611 extends along a straight trajectory, and the groove segment 611 is a straight groove, which can reduce the forming difficulty of the groove segment 611.

In some embodiments, the groove segment 611 extends along an arc trajectory.

It can be understood that, in the embodiments where the first groove 61 includes the first groove segment 611a and the second groove segment 611b, both the first groove segment 611a and the second groove segment 611b extend along an arc trajectory. In the embodiments where the first groove 61 includes the first groove segment 611a, the second groove segment 611b, and the third groove segment 611c, the first groove segment 611a, the second groove segment 611b, and the third groove segment 611c all extend along an arc trajectory.

In these embodiments, the groove segment 611 extends along an arc trajectory. The groove segment 611 is an arc-shaped groove. The pressure relief component 6 is more likely to crack along the groove segment 611 when the battery cell 10 undergoes pressure relief, achieving quicker opening of the predetermined pressure relief region 63.

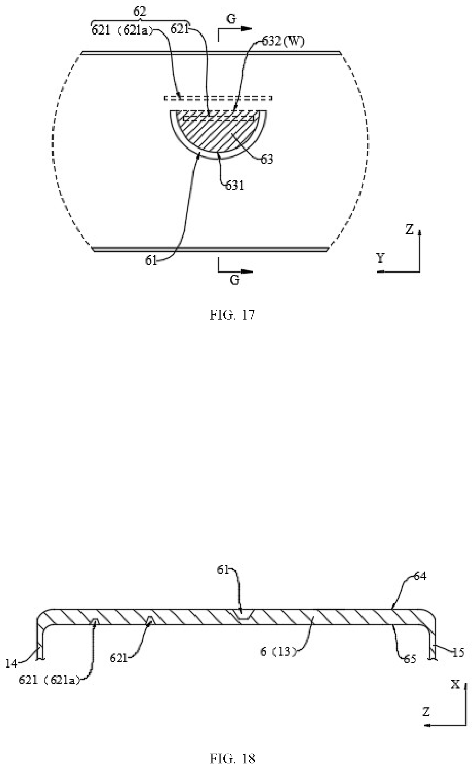

In some embodiments, referring to FIGs. 17 and 18, FIG. 17 is a partial view of a housing 1 according to yet some other embodiments of the present application; and FIG. 18 is a cross-sectional view along G-G of the housing 1 shown in FIG. 17. The first groove 61 extends along an arc trajectory.

A central angle of the first groove 61 may be less than 15°, 30°, 45°, 60°, 90°, 120°, 150°, 180°, 210°, 240°, 270°, 300°, 330°, or the like.

As an example, in the embodiments shown in FIGs. 17 and 18, the first groove 61 is provided on the first surface 64. The second groove 621 is provided on the second surface 65. A line connecting two ends of the first groove 61 is a first connecting line W. The first groove 61 and the first connecting line W jointly enclose one predetermined pressure relief region 63.

In these embodiments, the first groove 61 extends along an arc trajectory. The first groove 61 of this structure includes only one groove segment 611, simplifying the structure of the first groove 61.

In some embodiments, the second groove 621 extends along a straight trajectory. The second groove 621 has a simple structure and is easy to machine and form.

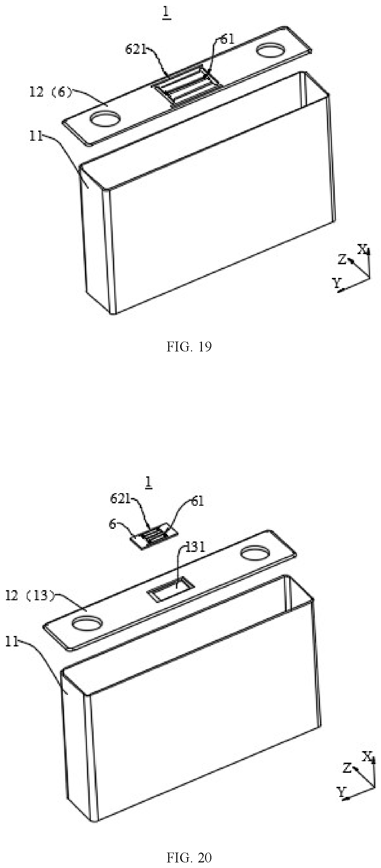

In some embodiments, referring to FIG. 19, FIG. 19 is an exploded view of a housing 1 according to some embodiments of the present application (a housing body 11 has an opening formed on one end, and an end cover 12 is a first wall portion 13). The pressure relief component 6 is integrally formed with the first wall portion 13.

The entire first wall portion 13 may serve as the pressure relief component 6, or a portion of the first wall portion 13 may serve as the pressure relief component 6, so as to achieve integral forming of the pressure relief component 6 and the first wall portion 13. Both the first groove 61 and the second groove 621 are provided on the first wall portion 13. One of the first surface 64 and the second surface 65 of the pressure relief component 6 is an inner surface of the first wall portion 13, and the other is an outer surface of the first wall portion 13.

In these embodiments, the pressure relief component 6 is integrally formed with the first wall portion 13, so that the first groove 61 and the second groove 621 can be directly formed on the first wall portion 13 to form an integral pressure relief structure with higher reliability, eliminating the mounting process of the pressure relief component 6, thereby providing better economy.

In some embodiments, the first groove 61 is stamped and formed on the first wall portion 13; and/or the second groove 621 is stamped and formed on the first wall portion 13.

If the first groove 61 is a single-level groove structure, when the first groove 61 is formed on the first wall portion 13, the first wall portion 13 may be stamped once to stamp out the first groove 61 on the first wall portion 13. If the first groove 61 is a multi-level groove structure, when the first groove 61 is formed on the first wall portion 13, the first wall portion 13 may be stamped multiple times, where a level of groove is stamped out each time; and after stamping multiple times, the first groove 61 is finally formed.

In these embodiments, if the first groove 61 is stamped and formed on the first wall portion 13, the forming method of the first groove 61 is simple, helping to reduce the production cost of the battery cell 10. If the second groove 621 is stamped and formed on the first wall portion 13, the forming method of the second groove 621 is simple, helping to reduce the production cost of the battery cell 10.

In some embodiments, referring to FIG. 20, FIG. 20 is an exploded view of a housing 1 according to some other embodiments of the present application (a housing body 11 has an opening formed on one end, and an end cover 12 is a first wall portion 13). The pressure relief component 6 is separated from the first wall portion 13, and the pressure relief component 6 is mounted on the first wall portion 13.

The pressure relief component 6 and the housing 1 are two separate components. The pressure relief component 6 is separately produced and then mounted on the first wall portion 13. The pressure relief component 6 may be mounted on the first wall portion 13 by welding, riveting, bonding, or the like. As an example, the first wall portion 13 is provided with a pressure relief hole 131. The pressure relief component 6 covers the pressure relief hole 131. The pressure relief component 6 is welded to the first wall portion 13.

In these embodiments, the pressure relief component 6 is a component independent of the housing 1. The pressure relief component 6 and the housing 1 can be separately produced and assembled, so that the production difficulty is low, and the production efficiency is high.

In some embodiments, still referring to FIGs. 19 and 20, the housing 1 includes a housing body 11 and an end cover 12. The housing body 11 has an opening formed on at least one end. The end cover 12 is in one-to-one correspondence with the opening. The end cover 12 seals the opening. At least one end cover 12 is the first wall portion 13.

The housing body 11 may have only one opening. For example, the housing body 11 has an opening formed on only one end. Alternatively, the housing body 11 may have a plurality of openings. For example, the housing body 11 has openings formed on two opposite ends. The number of end covers 12 is the same as the number of openings of the housing body 11. It can be understood that if the housing body 11 has only one opening, there is one end cover 12, where the end cover 12 is the first wall portion 13. If the housing body 11 has two openings, there are two end covers 12, where one end cover 12 may be the first wall portion 13, or the two end covers 12 may each be the first wall portions 13.

In the embodiments where the housing body 11 has an opening formed on one end, the positive electrode terminal 3 and the negative electrode terminal 3 may be provided on the end cover 12. The positive tab 21 and the negative tab 21 may be formed on one end of the electrode assembly 2 facing the end cover 12, so as to be respectively electrically connected to the positive electrode terminal 3 and the negative electrode terminal 3. In the embodiments where the housing body 11 has openings formed on two opposite ends, the positive electrode terminal 3 may be provided on one end cover 12, the negative electrode terminal 3 may be provided on the other end cover 12, and the positive tab 21 and the negative tab 21 may be respectively formed on two opposite ends of the electrode assembly 2, so that the positive tab 21 is electrically connected to the positive electrode terminal 3, and the negative tab 21 is electrically connected to the negative electrode terminal 3.

In the embodiments shown in FIG. 19, the housing body 11 has an opening formed on one end, the end cover 12 is the first wall portion 13 (not shown in FIG. 19), and the first wall portion 13 serves as the pressure relief component 6. In the embodiments shown in FIG. 20, the housing body 11 has an opening formed on one end, the end cover 12 is the first wall portion 13, and the pressure relief component 6 is mounted on the first wall portion 13.

In these embodiments, at least one end cover 12 is the first wall portion 13, so that the at least one end cover 12 has a pressure relief function, and the difficulty of forming the first groove 61 and the second groove 621 on the end cover 12 or the difficulty of mounting the pressure relief component 6 is lower.

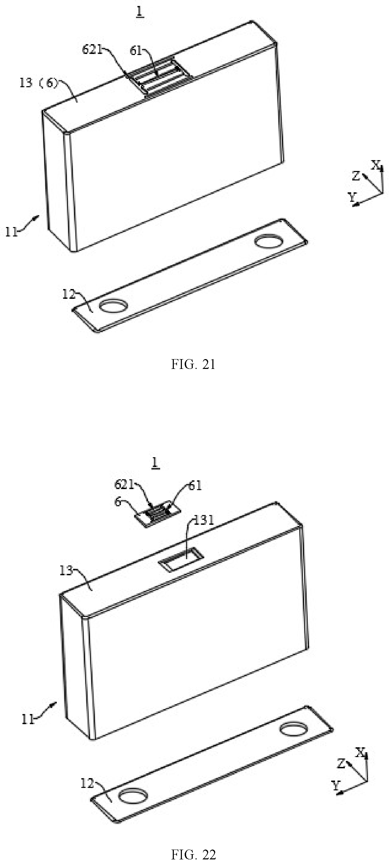

In some embodiments, referring to FIGs. 21 and 22, FIG. 21 is an exploded view of a housing 1 according to some embodiments of the present application (a housing body 11 has an opening formed on one end, and the housing body 11 includes a first wall portion 13); and FIG. 22 is an exploded view of a housing 1 according to some other embodiments of the present application (a housing body 11 has an opening formed on one end, and the housing body 11 includes a first wall portion 13). The housing 1 includes a housing body 11 and an end cover 12. The housing body 11 has an opening formed on at least one end. The end cover 12 is in one-to-one correspondence with the opening. The end cover 12 seals the opening. At least one wall portion in the housing body 11 is the first wall portion 13.

The housing body 11 may have only one opening. For example, the housing body 11 has an opening formed on only one end. The housing body 11 may alternatively have a plurality of openings. For example, the housing body 11 has openings formed on two opposite ends. The number of end covers 12 is the same as the number of openings of the housing body 11. It can be understood that if the housing body 11 has only one opening, there is one end cover 12. If the housing body 11 has two openings, there are two end covers 12. In the embodiments where the housing body 11 has an opening formed on one end, the positive electrode terminal 3 and the negative electrode terminal 3 may be provided on the end cover 12. The positive tab 21 and the negative tab 21 may be formed on one end of the electrode assembly 2 facing the end cover 12, so as to be respectively electrically connected to the positive electrode terminal 3 and the negative electrode terminal 3. In the embodiments where the housing body 11 has openings formed on two opposite ends, the positive electrode terminal 3 may be provided on one end cover 12, and the negative electrode terminal 3 may be provided on the other end cover 12. The positive tab 21 and the negative tab 21 may be respectively formed on two opposite ends of the electrode assembly 2, so that the positive tab 21 is electrically connected to the positive electrode terminal 3, and the negative tab 21 is electrically connected to the negative electrode terminal 3. In the housing body 11, one wall portion may be the first wall portion 13, or a plurality of wall portions may each be the first wall portion 13.

In these embodiments, at least one wall portion in the housing body 11 is the first wall portion 13, so that the housing body 11 has a pressure relief function, and when the battery cell 10 undergoes pressure relief, emissions discharged from the interior of the battery cell 10 are less likely to affect external components outside the end cover 12, reducing the risk of damage to the external components by the emissions. The external components may be busbar components connected to the electrode terminals 3, temperature detection components, voltage detection components, or the like. The emissions include but are not limited to: an electrolyte, dissolved or split positive and negative electrode plates, fragments of a separator, high-temperature and high-pressure gases generated by reaction, flame, and the like.

In some embodiments, still referring to FIGs. 21 and 22, the housing body 11 has an opening formed on only one end, and a wall portion of the housing body 11 opposite the end cover 12 is the first wall portion 13.

As an example, the housing body 11 is in a cuboid shape. The housing body 11 further includes four side walls. The four side walls are arranged around the first wall portion 13, and the four side walls and the first wall portion 13 jointly define an internal space of the housing body 11. In the embodiments shown in FIG. 21, the housing body 11 has an opening formed on one end, the wall portion of the housing body 11 opposite the end cover 12 is the first wall portion 13, and the pressure relief component 6 is the first wall portion 13. In the embodiments shown in FIG. 22, the housing body 11 has an opening formed on one end, the wall portion of the housing body 11 opposite the end cover 12 is the first wall portion 13, and the pressure relief component 6 is mounted on the first wall portion 13.

In these embodiments, the housing body 11 has a structure with an opening formed on one end, making the overall structure of the battery cell 10 simpler. The first wall portion 13 is the wall portion of the housing body 11 opposite the end cover 12, which can achieve directional pressure relief from the bottom of the housing body 11.

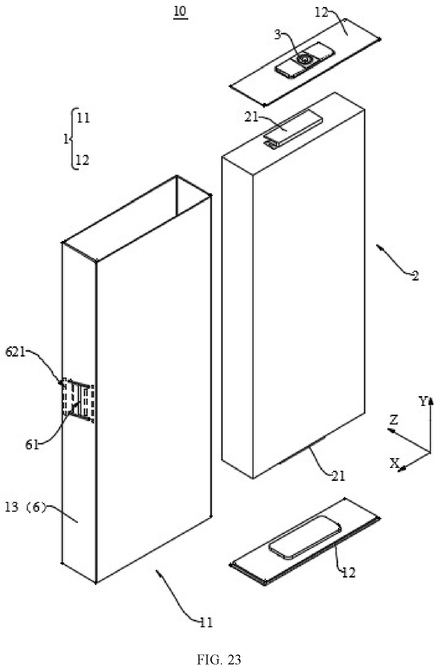

In some embodiments, referring to FIG. 23, FIG. 23 is an exploded view of a battery cell 10 according to some other embodiments of the present application. The housing body 11 has openings formed on two opposite ends.

In the housing body 11, one wall portion may be the first wall portion 13, or a plurality of wall portions may each be the first wall portion 13. The pressure relief component 6 may be integrally formed with the first wall portion 13. The pressure relief component 6 may alternatively be separated from the first wall portion 13. The pressure relief component 6 may alternatively be mounted on the first wall portion 13.

As an example, the housing body 11 is in a cuboid shape. The housing body 11 includes four wall portions. The four wall portions are connected end to end in sequence and jointly define the internal space of the housing body 11. Among the four wall portions, two opposite wall portions are large-area wall portions, and the other two wall portions are small-area wall portions. An area of an outer surface of the large-area wall portion is greater than an area of an outer surface of the small-area wall portion. One or two small-area wall portions in the housing body 11 are the first wall portions 13.

In these embodiments, the housing body 11 has a structure with openings formed on two opposite ends, and the electrode assembly 2 can be assembled into the housing body 11 through any one of the openings, which can reduce the assembly difficulty of the battery cell 10 and improve the assembly quality of the battery cell 10. The housing body 11 of this structure can be made longer (openings are formed on two ends of the housing body 11 in the length direction), helping to increase the electric capacity of the battery cell 10.

In some embodiments, a material of the pressure relief component 6 includes a steel material.

The steel material may be carbon steel, alloy steel, stainless steel, or the like.

It can be understood that, in the embodiments where the pressure relief component 6 is integrally formed with the first wall portion 13, the material of the first wall portion 13 includes a steel material. If the first wall portion 13 is the end cover 12, the end cover 12 may be made of steel. If the first wall portion 13 is a wall portion in the housing body 11, the housing body 11 may be made of steel.

In these embodiments, the pressure relief component 6 made of steel has better strength, so that under the condition that the burst pressure of the battery cell 10 is specified, the pressure relief component 6 can be made thinner, reducing the volume of the pressure relief component 6.

In some embodiments, the steel material is carbon steel or stainless steel.

In some embodiments, the material of the pressure relief component 6 includes an aluminum alloy.

It can be understood that, in the embodiments where the pressure relief component 6 is integrally formed with the first wall portion 13, the material of the first wall portion 13 includes an aluminum alloy. If the first wall portion 13 is the end cover 12, the end cover 12 may be made of aluminum alloy. If the first wall portion 13 is a wall portion in the housing body 11, the housing body 11 may be made of aluminum alloy.

The aluminum alloy has the characteristics of light weight and good ductility, making it easier to machine the first groove 61 and the second groove 621 on the pressure relief component 6.

In some embodiments, the aluminum alloy includes the following components by mass percentage: aluminum ≥ 99.6%, copper ≤ 0.05%, iron ≤ 0.35%, magnesium ≤ 0.03%, manganese ≤ 0.03%, silicon ≤ 0.25%, titanium ≤ 0.03%, vanadium ≤ 0.05%, zinc ≤ 0.05%, and each of other elements ≤ 0.03%.

This aluminum alloy belongs to the 3xxx series aluminum, and this aluminum alloy has lower hardness and better formability, reducing the machining difficulty of the first groove 61 and the second groove 621, and helping to improve the machining accuracy of the first groove 61 and the second groove 621 and improve the pressure relief consistency of the pressure relief component 6.

In some embodiments, the aluminum alloy includes the following components by mass percentage: aluminum ≥ 96.7%, 0.05% ≤ copper ≤ 0.2%, iron ≤ 0.7%, manganese ≤ 1.5%, silicon ≤ 0.6%, zinc ≤ 0.1%, each of other elements ≤ 0.05%, and total of other elements ≤ 0.15%.

This aluminum alloy belongs to the 5xxx series aluminum. The pressure relief component 6 made of this aluminum alloy has higher hardness, greater strength, and high resistance to damage.

Embodiments of the present application provide a battery 100 including the battery cell 10 according to any one of the above embodiments.

Embodiments of the present application provide an electric device including the battery cell 10 according to any one of the above embodiments, where the battery cell 10 is configured to provide electrical energy for the electric device.

Referring to FIG. 3, embodiments of the present application further provide a battery cell 10. The battery cell 10 includes a housing 1 and an electrode assembly 2. The electrode assembly 2 has a positive tab 21 and a negative tab 21. The electrode assembly 2 is accommodated in the housing 1. The housing 1 is in a cuboid shape, and the housing 1 includes a housing body 11 and an end cover 12. The housing body 11 has an opening formed on one end. The end cover 12 seals the opening, and the end cover 12 is provided with a positive electrode terminal 3 and a negative electrode terminal 3. The positive electrode terminal 3 is electrically connected to the positive tab 21 through one current collecting member 4. The negative electrode terminal 3 is electrically connected to the negative tab 21 through another current collecting member 4.

Referring to FIGs. 12 to 14, a wall portion of the housing body 11 opposite the end cover 12 is a pressure relief component 6. The pressure relief component 6 is a rectangular wall portion. A first groove 61 is provided on an outer surface of the pressure relief component 6. The first groove 61 is a two-level groove. The first groove 61 includes a plurality of groove segments 611. The plurality of groove segments 611 form an H-shaped groove. The first groove 61 includes a first groove segment 611a, a second groove segment 611b, and a third groove segment 611c. The first groove segment 611a, the second groove segment 611b, and the third groove segment 611c all extend along a straight trajectory. The second groove segment 611b and the third groove segment 611c are arranged in parallel. The first groove segment 611a is connected to the second groove segment 611b and the third groove segment 611c. Both the second groove segment 611b and the third groove segment 611c are perpendicular to the first groove segment 611a. A connection position of the first groove segment 611a and the second groove segment 611b is located at a midpoint position of the second groove segment 611b. A connection position of the first groove segment 611a and the third groove segment 611c is located at a midpoint position of the third groove segment 611c. The first groove segment 611a, the second groove segment 611b, and the third groove segment 611c jointly define two predetermined pressure relief regions 63. The pressure relief component 6 is configured to be capable of cracking along at least a portion of the first groove 61 when the battery cell 10 undergoes pressure relief. A groove group 62 is provided on an inner surface of the pressure relief component 6. The groove group 62 is in one-to-one correspondence with the predetermined pressure relief region 63. Each groove group 62 includes two second grooves 621. The two second grooves 621 are spaced apart along a width direction of the second grooves 621. The second groove 621 is configured to guide at least a portion of the predetermined pressure relief region 63 to flip so as to open the at least a portion of the predetermined pressure relief region 63. A minimum residual thickness of the first groove 61 is smaller than a minimum residual thickness of the second groove 621. The predetermined pressure relief region 63 has an opening end 631 and a non-opening end 632. The opening end 631 and the non-opening end 632 are oppositely disposed along the width of the second groove 621. Minimum residual thicknesses of the two second grooves 621 in the groove group 62 gradually decrease along the direction from the non-opening end 632 toward the opening end 631. A projection of one second groove 621 in the groove group 62 along a thickness direction X of a first wall portion is located in the predetermined pressure relief region 63 and located between the opening end 631 and the non-opening end 632 along the width direction of the second groove 621. A projection of the other second groove 621 in the groove group 62 along the thickness direction X of the first wall portion does not overlap with a projection of the predetermined pressure relief region 63 along the thickness direction X of the first wall portion. Two ends of the projection of the second groove 621 along the thickness direction X of the first wall portion along an extending direction respectively extend beyond two end portions of the first groove 61.

In such a battery cell 10, each groove group 62 includes a plurality of second grooves 621. The plurality of second grooves 621 are spaced apart along the width direction of the second grooves 621. Minimum residual thicknesses of the plurality of second grooves 621 in the groove group 62 gradually decrease along the direction from the non-opening end 632 toward the opening end 631. The plurality of second grooves 621 can all help the predetermined pressure relief region 63 to flip, making the flipping of the predetermined pressure relief region 63 easier, reducing the flipping difficulty of the predetermined pressure relief region 63, reducing an area swept by the predetermined pressure relief region 63 during flipping, reducing a flipping space required for the predetermined pressure relief region 63, reducing the risk of interference between the predetermined pressure relief region 63 and external components, and improving the reliability of the battery cell 10.

It should be noted that, without conflict, the embodiments and features in the embodiments in the present application may be combined with each other.

The above embodiments are only used to illustrate the technical solutions of the present application and are not intended to limit the present application. For those skilled in the art, various modifications and variations can be made to the present application. Any modification, equivalent replacement, improvement, and the like, made within the spirit and principle of the present application, shall be included in the protection scope of the present application.

## Claims

1. A battery cell, comprising:
a housing, comprising a first wall portion; and
a pressure relief component disposed on the first wall portion, wherein the pressure relief component comprises a first groove; the first groove defines at least one predetermined pressure relief region; and the pressure relief component is configured to be capable of cracking along at least a portion of the first groove when the battery cell undergoes pressure relief; and
the pressure relief component further comprises a groove group; the groove group is in one-to-one correspondence with the predetermined pressure relief region; each groove group comprises a plurality of second grooves; the plurality of second grooves are spaced apart along a width direction of the second grooves; and the second groove is configured to guide at least a portion of the predetermined pressure relief region to flip so as to open the at least a portion of the predetermined pressure relief region.

2. The battery cell according to claim 1, wherein the predetermined pressure relief region has an opening end and a non-opening end; the opening end and the non-opening end are oppositely disposed along the width direction of the second groove; and minimum residual thicknesses of the plurality of second grooves in the groove group gradually decrease along a direction from the non-opening end toward the opening end.

3. The battery cell according to claim 2, wherein maximum groove depths of the plurality of second grooves in the groove group gradually increase along the direction from the non-opening end toward the opening end.

4. The battery cell according to any one of claims 1 to 3, wherein a minimum residual thickness of the first groove is smaller than a minimum residual thickness of the second groove.

5. The battery cell according to claim 4, wherein the minimum residual thickness of the first groove is D₁, and 0.1 mm ≤ D₁ ≤ 0.5 mm.

6. The battery cell according to claim 4 or 5, wherein a maximum groove depth of the first groove is greater than a maximum groove depth of the second groove.

7. The battery cell according to any one of claims 1 to 6, wherein the first groove has two end portions; a line connecting the two end portions is a first connecting line; and the first groove and the first connecting line are connected to each other and jointly enclose the predetermined pressure relief region; and
the predetermined pressure relief region has an opening end and a non-opening end; the first connecting line is located at the non-opening end; the opening end and the non-opening end are oppositely disposed along the width direction of the second groove; a projection of at least one of the second grooves in the groove group along a thickness direction of the first wall portion is located in the predetermined pressure relief region and located between the opening end and the non-opening end along the width direction of the second groove; and the width direction of the second groove is perpendicular to the thickness direction of the first wall portion.

8. The battery cell according to claim 7, wherein a projection of at least one of the second grooves in the groove group along the thickness direction of the first wall portion does not overlap with a projection of the predetermined pressure relief region along the thickness direction of the first wall portion.

9. The battery cell according to claim 8, wherein at least one of the second grooves in the groove group is a first guide groove; a projection of the first guide groove along the thickness direction of the first wall portion does not overlap with the projection of the predetermined pressure relief region along the thickness direction of the first wall portion; the first guide groove and the first groove are spaced apart along a width direction of the first guide groove; and two ends of the projection of the first guide groove along the thickness direction of the first wall portion along an extending direction respectively extend beyond the two end portions of the first groove.

10. The battery cell according to claim 7, wherein projections of all the second grooves in the groove group along the thickness direction of the first wall portion are located in the predetermined pressure relief region and located between the opening end and the non-opening end along the width direction of the second groove.

11. The battery cell according to any one of claims 1 to 10, wherein along a thickness direction of the first wall portion, a projection of the second groove does not overlap with a projection of the first groove.

12. The battery cell according to any one of claims 1 to 11, wherein the first groove defines a plurality of the predetermined pressure relief regions.

13. The battery cell according to any one of claims 1 to 12, wherein the first wall portion is a rectangular wall portion; and the plurality of second grooves in the groove group are spaced apart along a width direction of the first wall portion.

14. The battery cell according to any one of claims 1 to 13, wherein along a thickness direction of the first wall portion, the pressure relief component has a first surface and a second surface opposite each other; the first groove is recessed from the first surface in a direction approaching the second surface; and the second groove is recessed from the second surface in a direction approaching the first surface.

15. The battery cell according to any one of claims 1 to 13, wherein along a thickness direction of the first wall portion, the pressure relief component has a first surface and a second surface opposite each other; and both the first groove and the second groove are recessed from the first surface in a direction approaching the second surface.

16. The battery cell according to claim 14 or 15, wherein the first surface is a surface of the pressure relief component facing the exterior of the battery cell; and the second surface is a surface of the pressure relief component facing the interior of the battery cell.

17. The battery cell according to any one of claims 14 to 16, wherein the first groove comprises a plurality of levels of grooves sequentially disposed along a direction from the first surface toward the second surface; and along the thickness direction of the first wall portion, in two adjacent levels of grooves, a level of groove away from the first surface is provided on a groove bottom surface of a level of groove close to the first surface.

18. The battery cell according to any one of claims 1 to 17, wherein the first groove comprises a plurality of groove segments; the plurality of groove segments are connected to each other; and the plurality of groove segments jointly define the at least one predetermined pressure relief region.

19. The battery cell according to claim 18, wherein the plurality of groove segments comprise a first groove segment and a second groove segment; the first groove segment is connected to the second groove segment; and the first groove segment and the second groove segment jointly define the at least one predetermined pressure relief region.

20. The battery cell according to claim 18, wherein the plurality of groove segments comprise a first groove segment, a second groove segment, and a third groove segment; the second groove segment and the third groove segment are oppositely disposed; the plurality of second grooves in the groove group are located on a same side of the first groove segment in a width direction; the first groove segment is connected to the second groove segment and the third groove segment; and the first groove segment, the second groove segment, and the third groove segment jointly define the at least one predetermined pressure relief region.

21. The battery cell according to claim 20, wherein a connection position of the second groove segment and the first groove segment is deviated from two ends of the second groove segment, and a connection position of the third groove segment and the first groove segment is deviated from two ends of the third groove segment, so that the predetermined pressure relief regions are formed on both sides of the first groove segment.

22. The battery cell according to claim 18, wherein the groove segment extends along a straight or arc trajectory.

23. The battery cell according to any one of claims 1 to 17, wherein the first groove extends along an arc trajectory.

24. The battery cell according to any one of claims 1 to 23, wherein the second groove extends along a straight trajectory.

25. The battery cell according to any one of claims 1 to 24, wherein the pressure relief component is integrally formed with the first wall portion.

26. The battery cell according to claim 25, wherein the first groove is stamped and formed on the first wall portion; and/or the second groove is stamped and formed on the first wall portion.

27. The battery cell according to any one of claims 1 to 24, wherein the pressure relief component is separated from the first wall portion, and the pressure relief component is mounted on the first wall portion.

28. The battery cell according to any one of claims 1 to 27, wherein the housing comprises:
a housing body having an opening formed on at least one end; and
an end cover in one-to-one correspondence with the opening, wherein the end cover seals the opening;
wherein at least one end cover is the first wall portion.

29. The battery cell according to any one of claims 1 to 27, wherein the housing comprises:
a housing body having an opening formed on at least one end; and
an end cover in one-to-one correspondence with the opening, wherein the end cover seals the opening;
wherein at least one wall portion in the housing body is the first wall portion.

30. The battery cell according to claim 29, wherein the housing body has the opening formed on only one end; and a wall portion of the housing body opposite the end cover is the first wall portion.

31. The battery cell according to claim 29, wherein the housing body has openings formed on two opposite ends.

32. The battery cell according to any one of claims 1 to 31, wherein a material of the pressure relief component comprises a steel material.

33. The battery cell according to claim 32, wherein the steel material is carbon steel or stainless steel.

34. The battery cell according to any one of claims 1 to 31, wherein a material of the pressure relief component comprises an aluminum alloy.

35. The battery cell according to claim 34, wherein the aluminum alloy comprises the following components by mass percentage: aluminum ≥ 99.6%, copper ≤ 0.05%, iron ≤ 0.35%, magnesium ≤ 0.03%, manganese ≤ 0.03%, silicon ≤ 0.25%, titanium ≤ 0.03%, vanadium ≤ 0.05%, zinc ≤ 0.05%, and each of other elements ≤ 0.03%.

36. The battery cell according to claim 34, wherein the aluminum alloy comprises the following components by mass percentage: aluminum ≥ 96.7%, 0.05% ≤ copper ≤ 0.2%, iron ≤ 0.7%, manganese ≤ 1.5%, silicon ≤ 0.6%, zinc ≤ 0.1%, each of other elements ≤ 0.05%, and total of other elements ≤ 0.15%.

37. A battery, comprising the battery cell according to any one of claims 1 to 36.

38. An electric device, comprising the battery cell according to any one of claims 1 to 36, wherein the battery cell is configured to provide electrical energy for the electric device.
